# EUROPÄISCHE PATENTSCHRIFT

(11) **EP 4 297 940 B1**
(45) Veröffentlichungstag und Bekanntmachung des Hinweises auf die Patenterteilung: **04.06.2025**
(21) Anmeldenummer: 22713023.4
(22) Anmeldetag: 28.02.2022
(51) Int. Cl.: B25J 19/00, F16G 13/16, H02G 3/04, H02G 11/00, F16L 3/015

(54) **RÄUMLICH AUSLENKBARE LEITUNGSFÜHRUNGSEINRICHTUNG, INSBESONDERE FÜR EINEN ROBOTER**
SPATIALLY DEFLECTABLE LINE GUIDING DEVICE, IN PARTICULAR FOR A ROBOT
DISPOSITIF DE GUIDAGE DE LIGNE POUVANT ÊTRE DÉVIÉ DANS L'ESPACE, EN PARTICULIER POUR UN ROBOT

(30) Priorität: 26.02.2021 DE 202021100995 U
(43) Veröffentlichungstag der Anmeldung: 03.01.2024
(73) Patentinhaber: Igus GmbH, 51147 Köln (DE)
(72) Erfinder: OTTERSBACH, Jörg, 53332 Bornheim (DE); STEEGER, Ralf, 53797 Lohmar (DE); KRIVDIC, Irfan, 51147 Köln (DE); MEYER, Matthias, 51107 Köln (DE)
(74) Vertreter: Lippert Stachow Patentanwälte Rechtsanwälte
(86) Internationale Anmeldenummer: PCT/IB2022/000087
(87) Internationale Veröffentlichungsnummer: WO 2022/180450

(56) Entgegenhaltungen:
- WO-A1-2017/195148
- WO-A1-93/05556
- WO-A2-03/084721
- DE-A1- 102010 019 269
- DE-A1- 102010 032 920
- DE-A1- 102010 032 921
- DE-A1- 102013 000 905
- DE-U1- 20 305 679
- DE-U1- 202017 101 896
- DE-U1- 202018 103 418
- DE-U1- 202020 100 699

## Beschreibung

Die Erfindung betrifft allgemein eine Leitungsführungseinrichtung zur dynamischen Führung von Leitungen, wie beispielsweise Kabeln, Schläuchen oder dergleichen, zwischen zwei Anschlussstellen von denen mindestens eine relativ zur anderen beweglich ist. Die Erfindung betrifft insbesondere eine derartige Leitungsführungseinrichtung, die zur Verwendung an einem Roboter mit mehreren Freiheitsgraden, insbesondere an einem Industrieroboter bzw**.** industriellen Gelenkarmroboter geeignet ist**.**

Als Roboter wird vorliegend allgemein jede Art Handhabungseinrichtung verstanden, die automatisiert betrieben wird, insbesondere jedoch industrielle Gelenkarmroboter mit einer Mehrzahl Freiheitsgrade. Die vorliegende Erfindung ist jedoch nicht auf eine Anwendung bei Robotern beschränkt, sondern kann auch anderweitig vorteilhaft eingesetzt werden, beispielsweise bei Hubvorrichtungen oder dergleichen.

Die Leitungsführungseinrichtung dient zur geschützten Führung von Leitungen, insbesondere Versorgungsleitungen zur Versorgung mit Strom, Signalen und/oder Betriebsmedien. Bei einem Gelenkarmroboter dienen die Leitungen beispielsweise zur Versorgung des am Endeffektor, auch Roboterhand genannt, angeordneten Werkzeugs.

Zur geschützten Führung von Leitungen zwischen zwei relativ beweglichen Anschlussstellen sind unterschiedlichste Leitungsführungseinrichtungen, wie beispielsweise Energieführungsketten, hinlänglich bekannt.

Die Erfindung betrifft insbesondere eine Leitungsführungseinrichtung die entlang ihrer Länge wenigstens einen räumlich auslenkbaren Abschnitt umfasst.

Derartige gattungsgemäße Leitungsführungseinrichtungen sind beispielsweise bereits in den Patenten EP 1 492 967 B1 oder EP 1 616 376 B1 vorgeschlagen worden. Solche gattungsgemäßen Leitungsführungseinrichtungen bzw. Energieketten umfassen eine Vielzahl Glieder, die einen Aufnahmeraum zum schützenden Führen der Leitungen bilden, wobei die Glieder in einer Längsrichtung aufeinanderfolgend angeordnet sind und durch eine jeweilige Gelenkverbindung miteinander gelenkig verbunden sind. Die Gelenkverbindung zwischen zwei Gliedern erlaubt dabei jeweils ein räumliches Auslenken der verbundenen Glieder relativ zueinander, was insbesondere aber nicht ausschließlich für Anwendungen an Gelenkarmrobotern bzw. Industrierobotern erforderlich ist.

Weitere derartigen Leitungsführungseinrichtungen sind in DE 20 2018 103418 U1, DE 10 2010 032920 A1, DE 20 2020 100699 U1 und WO 03/084721 A2 offenbart.

Insbesondere bei derartigen Anwendungen verändert sich typisch sowohl der Abstand als auch die Raumlage zwischen den beiden relativ beweglichen Anschlussstellen, beispielsweise zwischen der dritten Achse eines Gelenkarmroboters und der sechsten Achse bzw. dem Endeffektor eines Gelenkarmroboters. Dazu ist eine Länge der Leitungsführungseinrichtung erforderlich, welche die größte mögliche Entfernung und Drehwinkel zwischen den Anschlussstellen abdeckt. Um unkontrollierte Bewegungen wegen der je nach Stellung überschüssigen Länge in derartigen Anwendungen zu vermeiden, sind sogenannte Rückholsysteme oder Rückzugsysteme bereits aus dem Stand der Technik bekannt.

Eine verbreitete Bauweise solcher Rückzugssysteme umfasst eine längsverschieblich gelagerte Umlenkrolle um welche die Leitungsführungseinrichtung unter Bildung einer Schlaufe bzw. eines Umlenkbogens so geführt ist, dass die Längsverstellung der Umlenkrolle die je nach Betriebsstellung nicht benötigte Länge der Leitungsführungseinrichtung einzieht bzw. zurückzieht (Rückzug). Ein Beispiel eines solchen Rückzugsystems bzw. Rückholsystems ist aus dem Patent EP 3 126 104 B1 bekannt. Die Bauweise derartiger Systeme ist jedoch vergleichsweise aufwendig und nimmt Bauraum ein, was u.a. die Bewegungsfreiheit eines Roboters beeinträchtigen kann.

Eine in dieser Hinsicht vereinfachte Lösung zum Rückstellen bzw. Rückholen räumlich auslenkbarer Leitungsführungseinrichtungen bzw. Energieketten wurde im Patent EP 1 200 753 B1 vorgeschlagen. Hierbei ist im Aufnahmeraum der Leitungsführungseinrichtung zur Rückstellung wenigstens ein federnder Stab vorgesehen, der um seine Längsachse federt und sich in Längsrichtung im Aufnahmeraum erstreckt. Der Stab erzeugt bei Verschwenkung der Kettenglieder eine entgegenwirkende Rückstellkraft. Auch diese Lösung erfordert jedoch einen gewissen Bauraum bzw. Bewegungsspielraum für die Bewegung des mit dem federnden Stab versehenen Längsabschnitts der Leitungsführungseinrichtung. Eine andere Lösung mit einem Federarm, die jedoch ebenfalls Bauraum, beispielsweise um den Roboterarm, erfordert wurde in DE 20 2006 0066 37 U1 vorgeschlagen.

Mit Blick auf den vorstehenden Stand der Technik liegt eine erste Aufgabe der vorliegenden Erfindung mithin darin, eine vereinfachte und kompakt bauende Lösung vorzuschlagen, welche insbesondere aber nicht ausschließlich die Funktion eines Rückholsystems realisieren kann. Die Lösung soll dabei insbesondere für Gelenkarmroboter geeignet sein.

Eine gattungsgemäße Leitungsführungseinrichtung dient zur Führung von flexiblen Leitungen, wie Kabeln, Schläuchen oder dergleichen, zwischen einer ersten und einer dazu relativbeweglichen zweiten Anschlußstelle, insbesondere an einem Roboter mit mehreren Freiheitsgraden. Hierzu umfasst die Leitungsführungseinrichtung insbesondere eine Vielzahl Glieder, die einen Aufnahmeraum für Leitungen bilden, in einer Längsrichtung aufeinanderfolgend angeordnet sind und durch eine jeweilige Gelenkverbindung gelenkig miteinander verbunden sind. Die Gelenkverbindung erlaubt bzw. ermöglicht dabei ein räumliches Auslenken der verbundenen Glieder zueinander.

Erfindungsgemäß umfasst die Leitungsführungseinrichtung bzw. Energieführungskette, in einfachster Ausführungsform der Erfindung, mindestens ein elastisches Rückstellelement und weist einen längenvariablen Abschnitt auf. Somit ist erfindungsgemäß mindestens Längsabschnitt der Leitungsführungseinrichtung bzw. Energieführungskette bestimmungsgemäß so gestaltet, dass die Länge dieses Längsabschnitts veränderlich bzw. variabel ist. Der längenvariable Abschnitt kann insbesondere gegen eine Rückstellkraft, die das elastische Rückstellelement bewirkt, verlängerbar sein.

Dabei weist der längenvariable Abschnitt insbesondere eine Anzahl Glieder auf, die sowohl zueinander um die Längsrichtung relativdrehbar als auch zur Verlängerung des längenvariablen Abschnitts in Längsrichtung zueinander längsverstellbar miteinander verbunden sind. Dabei können die Glieder insbesondere gelenkig verbunden sein und/oder insbesondere derart verbunden bzw. mechanisch gekoppelt sein, dass ein Längsverstellen zweier Glieder zueinander eine gewünschte, vorgegebene Relativdrehung bewirkt.

Das Rückstellelement ist bestimmungsgemäß elastisch längsdehnbar und so angeordnet, dass es eine Rückstellkraft auf den längenvariablen Abschnitt ausübt, welcher einer Verlängerung des längenvariablen Abschnitts entgegenwirkt.

Ein Kerngedanke der Erfindung besteht darin, durch die Kombination erlaubter Relativdrehung der Glieder mit der Verstellbarkeit bzw. Verschiebbarkeit der Glieder zueinander in Längsrichtung, eine Längenveränderung überhaupt erst zu ermöglichen, da die aufzunehmenden Leitungen für sich nicht längsdehnbaren sind, d.h. grundsätzlich keine Verlängerung zulassen (wobei die Leitungen an sich nicht zwingender Gegenstand der Erfindung sind). Die Erfindung beruht unter anderem auf der Erkenntnis, dass eine schraubenlinienförmige Verlegung der Leitungen in der Leitungsführungseinrichtung, in gewissen Grenzen eine Streckung zulässt. Dies kann unter Kombination erlaubter Relativdrehung und Längsverstellbarkeit zwischen den Gliedern ausgenutzt werden, um eine vergleichsweise einfach in Längsrichtung dehnbare bzw. ein- und ausziehbare Gestaltung zumindest in einem Längsabschnitt der Leitungsführungseinrichtung zu verwirklichen.

In Kombination mit einem elastisch längsdehnbaren Rückstellelement kann eine besonders einfache, kompakt und leicht bauende Rückstell-Funktionalität erzielt werden.

Der spiralige bzw. schraubenlinienförmige Verlauf kann dabei durch die Glieder im längenvariablen Abschnitt selbst vorgegeben sein, oder z.B. unter optionaler Erweiterung durch mindestens ein entsprechend verformbares Stützelement, z.B. eines bandartigen Trägers, mit dehnbarer helixartiger bzw. schraubenlinienförmiger Grundform, an welchem die Leitungen im längenvariablen Abschnitt gehalten sind.

Die Verbindung zwischen den Gliedern, kann mit mehreren Freiheitsgraden gelenkig sein, oder kann z.B. in Art eines Schraubgelenks ausgeführt sein.

Sofern der längenvariable Abschnitt selbst den schraubenförmigen bevorzugten Verlauf der Leitungen vorgibt, sind dessen Glieder entsprechend bevorzugt nicht frei zueinander drehbar, sondern nur in entsprechend vorgegebener Weise.

Insbesondere bei einer derartigen Ausführungsform ist es vorteilhaft, wenn die Verbindung jeweils aufeinanderfolgender Glieder des längenvariablen Abschnitts so gestaltet ist, dass ein Längsverstellen zweier Glieder zueinander, je nach Richtung in Verlängerung bzw. zurück in die eingezogene Stellung, richtungsabhängig eine Relativdrehung in entweder der einen oder in der entgegengesetzten Drehrichtung um die Längsrichtung vorgibt.

Die Verbindung zwischen den Gliedern im längenvariablem Abschnitt kann eine Art Zwangsführung, insbesondere eine Drehführung umfassen, welche bei verlängernder Längsverstellung der beiden Glieder deren Relativdrehung, d.h. des einen Glieds gegenüber dem anderen Glied, in einer ersten Drehrichtung bewirkt und entsprechend umgekehrt, bei rückstellender Längsverstellung der beiden Glieder, deren entgegengesetzte Relativdrehung bewirkt. Sofern keine räumliche Auslenkbarkeit im längenvariablen Abschnitt benötigt wird, kann dies beispielsweise durch ein Schraubgelenk zur Verbindung der Glieder realisiert werden. Bevorzugt sind jedoch Verbindungarten bzw. Gelenktypen mit zusätzlichen Freiheitsgraden, die zumindest eine geringe räumliche Auslenkung zwischen den Gliedern des längenvariablen Abschnitts zulassen, insbesondere zumindest um zwei Achsen senkrecht zur Längsrichtung.

In einer bevorzugten Gestaltung hat der längenvariable Abschnitt einen ersten Teilabschnitt, in welchem verbundene Glieder jeweils bei Verlängerung in einer ersten Drehrichtung relativdrehen und bei Rückstellung entgegengesetzt relativdrehen, sowie einen zweiten Teilabschnitt, in welchem verbundene Glieder bei Verlängerung in einer zweiten Drehrichtung, die der ersten Drehrichtung gegensinnig bzw. entgegengesetzt ist, relativdrehen, und bei Rückstellung entgegengesetzt relativdrehen. Das Relativdrehen bezieht sich hier ungeachtet des drehenden Glieds auf zwei verbundene aufeinanderfolgende Glieder, d.h. das eine Glied dreht gegenüber dem anderen. Bevorzugt wird somit jeweils in jedem Teilabschnitt in Auszugs- bzw. Ausstellrichtung (bei Verlängerung) nur ein vorgegebener Drehsinn zugelassen bzw. bewirkt und in die Rückstellrichtung nur der entgegengesetzte Drehsinn, d.h. je nachdem ob der längenvariable Abschnitt auseinandergezogen wird oder sich wieder zusammenzieht, erfolgt die Relativdrehung in der einen oder anderen Drehrichtung. Somit kann gewährleistet werden, dass helixartig verlaufende Leitungen jeweils zuverlässig zwischen zwei gegensinnigen Wendelformen hin- und herbewegt werden, die übermässige Belastung vermeiden.

Besonders bevorzugt ist das Rückstellelement zur Ausübung einer Vorspannung in Längsrichtung, insbesondere einer bedarfsweise einstellbaren Vorspannung, angeordnet um den längenvariablen Abschnitt auch bei relativ steifen Leitungen stets in eine Grundstellung zusammenzuziehen, die der geringst möglichen Längsabmessung entspricht, **d.h.** eine maximale Verlängerung aus dieser Grundstellung zulässt. Das Rückstellelement gewährleistet so zuverlässig einen Rückzug in die eingezogene kürzeste Stellung.

Das mindestens eine elastische Rückstellelement kann insbesondere seilartig oder bandartig ausgeführt sein. Es kann als Rückstellelement insbesondere ein Gummikabel, vorzugsweise mit Gummifäden und/oder Gummibändern sowie einer Umflechtung, verwendet werden. Alternativ kann auch z.B. eine geeignete Spiralfeder als Rückstellelement vorgesehen werden.

In einer Weiterbildung ist an mindestens einem Endbereich des längenvariablen Abschnitts, insbesondere an einem endseitigen Glied des längenvariablen Abschnitts eine Einstellvorrichtung zum Einstellen der Vorspannung des Rückstellelements vorgesehen.

Für eine möglichst geringe Belastung der Leitungen, insbesondere bei Verwendung von zwei gegensinnig drehbaren Teilabschnitten, kann zwischen zwei Teilabschnitten des längenvariablen Abschnitts ein Mittelstück vorgesehen sein, das eine Zugentlastung für die zu führenden Leitungen aufweist. Das Mittelstück hat vorzugsweise eine grössere Baulänge, als die Baulänge bzw. Teilung der Anzahl Glieder des längenvariablen Abschnitts.

Ein solches Mittelstück kann insbesondere an seinen Längsenden mit den gegensinnig drehenden Teilabschnitten verbunden sein, z.B. mittels jeweils gegensinniger Drehführungen oder ggf. auch drehfest.

Besonders bevorzugt, insbesondere bei einem seilartigen Rückstellelement, haben zumindest die Glieder des längenvariablen Abschnitts jeweils einen zentralen Kern mit einer zentralen Durchführöffnung, durch welche das elastische Rückstellelement mit Spiel frei geführt ist. Dies erlaubt es, das elastische Rückstellelement auf der neutralen Faser der Leitungsführung anzuordnen. Das Rückstellelement ist vorzugsweise mit Spiel, reibungs- und verschleissarm durch den Kern geführt.

Ein zentraler Kern ist nicht zwingend erforderlich, wenn etwa die Verbindung der Glieder über rohrartige Mantelabschnitte erzielt wird. Die Bauweise mit zentralem Kern ist jedoch besonders bevorzugt, z.B. wenn der längenvariable Abschnitt selbst - ohne zusätzliche Stützbauteile für die Leitungen - den gewünschten Verlauf der Leitungen vorgibt.

Ein zentraler Kern kann vorzugsweise Führungselemente der Drehführung aufweisen bzw. bilden und/oder vorzugsweise beim Längsverstellen zweier Glieder zueinander richtungsabhängig eine Relativdrehung in der einen bzw. in der entgegengesetzten Drehrichtung um die Längsrichtung vorgeben. Der Kern kann z.B. beiderseitig die Gelenkteile eines Schraubgelenks oder eines komplexeren Gelenks mit mehr Freiheitsgraden bilden. Alternativ kann die gewünschte Relativdrehung auch über radial äussere Führungsteile, z.B. eine Drehführung, an Mantelteilen der Glieder realisiert werden.

Bevorzugt wird vorgesehen, dass zumindest die Glieder des längenvariablen Abschnitts bzw. jedes Teilabschnitts, oder auch alle Glieder, jeweils einen zentralen Kern aufweisen, der einen Gelenkkopf und eine in Längsrichtung gegenüberliegende Gelenkaufnahme bildet, welche zur gelenkigen Verbindung mit dem Gelenkkopf des folgenden Glieds korrespondierend gestaltet ist.

Dabei bilden Gelenkkopf und Gelenkaufnahme vorzugsweise zugleich die Drehführung zum Vorgeben einer bestimmungsgemäßen bzw. gewünschten Relativdrehung, insbesondere durch eine oder mehrere schraubenförmig verlaufende Führungsflächen, z.B. mit schraubenförmig verlaufenden muldenartigen Vertiefungen, innenseitig in der Gelenkaufnahme. So können Gelenkkopf und Gelenkaufnahme zum Vorgeben der Relativdrehung mit einem oder mehreren Führungselementen am Gelenkkopf zusammenwirken.

Unterschiedliche Formen von Gelenkkopf und zusammenwirkender Gelenkaufnahme liegen im Rahmen der Erfindung.

In einer Variante ist vorgesehen, dass der Gelenkkopf eine Grundform mit im wesentlichen dreieckigen Querschnitt aufweist, vorzugsweise mit bogenförmig gerundeten Seiten, deren drei Scheitel als Führungselemente an entsprechenden schraubenförmig verlaufenden Führungsflächen innenseitig in der Gelenkaufnahme geführt sind.

In einer anderen Variante ist vorgesehen, dass der Gelenkkopf eine Grundform mit im wesentlichen elliptischen Querschnitt aufweist, deren zwei Hauptscheitel als Führungselemente an entsprechenden schraubenförmig verlaufenden Führungsflächen innenseitig in der Gelenkaufnahme geführt sind.

Grundsätzlich können Gelenkkopf und Gelenkaufnahme bei geeigneter Gestaltung eine Gelenkverbindung bilden, welche längsverstellbar, relativdrehbar und, für ein räumliches Auslenken der verbundenen Glieder zueinander, um mindestens zwei Achsen senkrecht zur Längsrichtung schwenkbar ist, wobei insbesondere die Seiten der Grundform des Gelenkkopfes im Längsschnitt konkav geformt sind, insbesondere entsprechend einem Krümmungsradius zur räumlichen Auslenkbarkeit. Dabei können Gelenkkopf und Gelenkaufnahme ähnlich der Wirkung eines Kugelgelenks zusammenwirken.

Zur Erleichterung des Zusammenbaus bzw. zur besseren Herstellbarkeit der erfindungsgemäßen Glieder, insbesondere in Kunststoff-Spritzgusstechnik, sind Gelenkkopf und Gelenkaufnahme vorzugsweise durch zwei getrennte Kunststoff-Bauteile gebildet. Dies kann insbesondere durch zweiteilige Bauweise des Kerns erreicht werden, z.B. mit zwei zusammenfügbaren komplementären Spritzguss-Teilen, welche vorzugsweise eine an einer auf die Längsachse gelegte Schnittstellenebene verbindbar sind. So lässt sich insbesondere die komplexe Geometrie der Aufnahme, insbesondere zur Realisierung der gewünschten Rotations-Translations-RelativVerstellung, leichter bzw. günstiger in Spritzgusstechnik herstellen. Die komplementären Kernteile können dabei formschlüssig und/oder kraftschlüssig verbunden werden.

Zur Erleichterung des Zusammenbaus bzw. der Einstellbarkeit des Drehsinns kann auch die Gelenkaufnahme selbst durch mindestens zwei separate Einsatzteile gebildet sein, welche in einer Aufnahme am Kern befestigt sind, wobei jedes Einsatzteil vorzugsweise jeweils eine schraubenförmig verlaufende Innenfläche aufweist.

Zumindest die Glieder des längenvariablen Abschnitts bzw. von dessen Teilabschnitten oder alle Glieder haben bevorzugt jeweils einen zentralen Kern mit mindestens zwei im Wesentlichen radialen Stegen an welchen jeweils mindestens ein Mantelsegment gehalten ist. Die Mantelsegmente dienen dabei zur Begrenzung des Aufnahmeraums in Radialrichtung, wobei die Mantelsegmente vorzugsweise aufschwenkbar angeordnet sind und oder biegsam ausgeführt sind und zwischen je zwei Mantelsegmenten eine Einführöffnung bilden. Dies erleichtert die Montage bzw. den Austausch der Leitungen im Bedarfsfalle. Zumindest im längenvariablen Abschnitt können die Mantelsegmente ggf. ein umfänglich und in Längsrichtung geschlossenes Rohr bilden. Bei derartiger Gestaltung kann die Verbindung jeweils aufeinanderfolgender Glieder eine Drehführung an den Mantelsegmenten umfassen, insbesondere mit schräg verlaufenden Nuten und darin eingreifenden Vorsprüngen an Überlappungsbereichen der Mantelsegmente.

In einer Variante umfasst die in Längsrichtung längsverstellbare Verbindung jeweils mindestens zwei Längsanschläge, welche das Längsverstellen zweier Glieder in beide Richtungen beschränken. Entsprechende Längsanschläge können am Kern und/oder an Mantelsegmenten vorgesehen sein. Besonders bevorzugt sind beide Längsanschläge zur Begrenzung des Auszugs bzw. des Einzugs durch eine Gelenkaufnahme am Kern gebildet. So sind hierzu keine Gestaltungsmaßnahmen an den Mantelsegmenten erforderlich.

Das Längsspiel bzw. axiale Verstellmaß der längsverstellbaren Verbindung zwischen benachbarten Gliedern beträgt bevorzugt mindestens 20%, vorzugsweise mindestens 30% und insbesondere bis zu 45% der Glieder-Teilung bzw. axialen Baulänge des Glieds, insbesondere des zentralen Kerns.

Je nach gewünschten Eigenschaften kann die Leitungsführungseinrichtung so gestaltet sein, dass die Vielzahl Glieder, die räumlich auslenkbar verbunden sind, von der Anzahl Glieder im längenvariablen Abschnitt verschieden ausgeführt sind, insbesondere nicht längsverstellbar, d.h. in Richtung Zugkraftübertragung relativ zueinander nicht verstellbar oder verlängerbar (zugfest) bzw. mit entlang der neutralen Faser unveränderbarer Baulänge.

Somit können räumlich auslenkbare Glieder eines ersten Typs, insbesondere an sich bekannter Bauart, welche nicht gegeneinander längsverstellbar sind, mit erfindungsgemäß gestalteten Gliedern eines zweiten Typs, die im längenvariablen Abschnitt vorgesehen sind, zu einer Leitungsführungseinrichtung verbunden sein.

Erfindungsgemäß gestaltete Glieder unterscheiden sich insbesondere durch die Art der Verbindung, insbesondere gelenkigen Verbindung, mit welcher diese jeweils paarweise miteinander verbunden sind, von räumlich auslenkbaren Gliedern an sich bekannter Bauart, und können davon abgesehen zu der bekannten eine vergleichbare oder im Wesentlichen identische Bauart haben, z.B. hinsichtlich der umfänglichen Begrenzung durch Mantelteil oder dgl.

In einer bevorzugten Ausführung ist der Längsabschnitt mit erfindungsgemäß gestalteten Gliedern zur Längenveränderung mit mindestens einem zugfesten Längsabschnitt, der nicht längsveränderlich ist und der aus räumlich auslenkbaren Gliedern eines anderen Typs besteht, verbunden. Der längenvariable Abschnitt kann z.B. zwischen zwei solchen nicht längsveränderlichen Längsabschnitten vorgesehen sein.

Alternativ können je nach Anwendung auch alle Glieder der Leitungsführungseinrichtung räumlich auslenkbar sowie zueinander längsverstellbar und relativdrehbar ausgeführt sein. Die gesamte Leitungsführungseinrichtung kann aus Gliedern bestehen, die sowohl räumlich auslenkbar verbunden sind, als auch eine längenvariable Verstellung ermöglichen.

Die Glieder könnenin den entgegengesetzt verdrehbaren Teilabschnitten bis auf die unterschiedlichen Drehrichtungen in der vorzugsweisen gelenkigen Verbindung im Wesentlichen baugleich ausgeführt und über ein zusätzliches Mittelstück verbunden sein.

Die Leitungsführungseinrichtung hat in der Anwendung typisch mindestens eine darin geführte Leitung, wobei die mindestens eine Leitung im längenvariablen Abschnitt schraubenlinienförmig bzw. helixartig verlaufend angeordnet ist, insbesondere entsprechend einer ersten Schraubenwendel im ersten Teilabschnitt und einer mit entgegengesetztem Drehsinn verlaufenden zweiten Schraubenwendel im zweiten Teilabschnitt.

Die Erfindung betrifft ferner auch einen Roboter, insbesondere Industrie-Gelenkarmroboter, mit einer Leitungsführungseinrichtung gemäss einer der oben beschriebenen Gestaltungen.

Die Erfindung ist für jegliche Art von Versorgungsleitungen, wie Kabel, Schläuche oder dgl. verwendbar, insbesondere für Strom- und Datenversorgungsleitungen aber auch Druckluftschläuche und dgl.

Weitere Einzelheiten, Merkmale und Vorteile der Erfindung ergeben sich aus der nachfolgenden, ausführlichen Beschreibung bevorzugter Ausführungsbeispiele anhand der beiliegenden Abbildungen. Hierbei zeigen:
**FIG.1A-1D****:** Seitenansichten und perspektivische Ansichten eines Gelenkarmroboters mit einer erfindungsgemäßen Leitungsführungseinrichtung, in einer ersten Stellung (FIG.1A-1B), bei welcher die Leitungsführungseinrichtung eingezogen bzw. rückgezogen ist, und einer zweiten Stellung (FIG.1C-1D), bei welcher die Leitungsführungseinrichtung ausgezogen ist;
**FIG.2A-FIG.2E:** Ansichten eines ersten Ausführungsbeispiels eines erfindungsgemäßen Kettenglieds für eine verlängerbare Leitungsführungseinrichtung;
**FIG.3A-3D:** einen verlängerbaren, längenvariablen Abschnitt mit einer rein beispielhaften Anzahl von Gliedern nach FIG.2A-2E, in einem eingezogenen Zustand, im Längsschnitt (FIG.3A) und in Frontansicht (FIG.3B), sowie in einem ausgezogenen, verlängerten Zustand, im Längsschnitt (FIG.3C) und in Frontansicht (FIG.3D), mit einem elastischen Rückstellelement zum Rückstellen in den eingezogenen Zustand;
**FIG.4****:** eine schematische Darstellung des Leitungsverhaltens bzw. des schraubenlinienförmigen Leitungsverlaufs von in einer erfindungsgemäßen Leitungsführungseinrichtung geführten Leitungen in einem eingezogenen Zustand und in einem ausgezogenen Zustand; und
**FIG.5A-5B****:** eine besonders bevorzugte Anordnung mit einem verlängerbaren, längenvariablen Abschnitt mit zwei gegensinnig drehenden Teilabschnitten aus Gliedern nach FIG.2A-2E;
**FIG.6A-6G****:** Ansichten eines zweiten Ausführungsbeispiels eines verlängerbaren Längsabschnitts einer Leitungsführungseinrichtung: in eingezogenem (FIG.6A, 6C) und ausgezogenen Zustand (FIG.6B, 6D) des Längsabschnitts, sowie in einer Seitenansicht zum Verlauf darin geführter Leitungen: in voll eingezogenem Zustand (FIG.6E), in halb ausgezogenem Zustand (FIG.6F) und in voll ausgezogenem Zustand (FIG.6G) mit prozentualer Angabe einer erzielbaren Längenänderung;
**FIG.7A****-****FIG.7D****:** Ansichten von zwei Kettengliedern des zweiten Ausführungsbeispiels, in Perspektivansichten (FIG.7A, 7B), sowie in Explosionsansichten mit einem Kettenglied für rechtsdrehende Verbindung (FIG.7C) und einem Kettenglied für linksdrehende Verbindung (FIG.7D);
**FIG.8****:** ein Ausführungsbeispiel eines Mittelstücks zur Verbindung von gegensinnig drehenden Teilabschnitten aus Kettengliedern gemäß FIG.7C bzw. FIG.7D;
**FIG.9****:** ein Ausführungsbeispiel eines Endstücks bzw. Verbindungsstücks zur Verbindung von Kettengliedern gemäß FIG.7A-7D mit einem konventionellen Kettenglied;
**FIG.10A****-****FIG.10B****:** Perspektivansichten eines Kettenglieds gemäß eines dritten Ausführungsbeispiels der Erfindung als Variante zu FIG.7, z.B. für größere Durchmesser;
**FIG.11****:** eine Perspektivansicht eines Kettenglieds gemäß eines vierten Ausführungsbeispiels der Erfindung;
**FIG.12A-12C****:** Perspektivansichten eines Kettenglieds gemäß eines fünften Ausführungsbeispiels der Erfindung, als Variante zu FIG.2, mit zwei austauschbaren mehrteiligen Einsätzen einer Gelenkaufnahme (FIG.12D, FIG.12E), die wählbar eine von zwei gegensinnigen Drehrichtungen vorgeben; und
**FIG.13A-13B****:** eine Perspektivansicht eines Kettenglieds gemäß eines sechsten Ausführungsbeispiels der Erfindung, als Variante zu FIG.2.

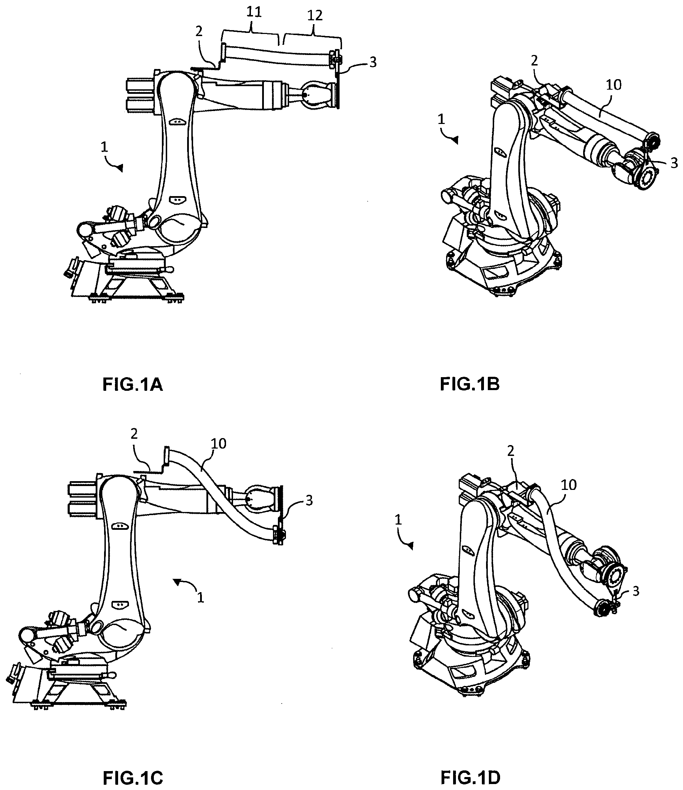

FIG.1A-1D zeigen als Beispiel eines Industrieroboters, einen Gelenkarmroboter 1, hier mit serieller Kinematik, z.B. ein 6-Achs-Knickarmroboter an sich bekannter Bauweise. Die Erfindung ist besonders aber nicht ausschließlich an derartigen Roboterarmen mit mehreren Freiheitsgraden vorteilhaft anwendbar. Zwischen zwei Anschlussstellen 2, 3, hier z.B. an der dritten und sechsten Achse, ist eine Leitungsführungseinrichtung 10 angeordnet, wobei die Leitungsführungseinrichtung 10 endseitig mittels Schellen an beiden Anschlussstellen 2, 3 am Gelenkarmroboter 1 festgelegt ist. Die Anschlussstelle 3 ist im Raum gegenüber der Anschlussstelle 2 entsprechend den Roboterachsen (vierte bis sechste Achse) relativbeweglich.

Die Leitungsführungseinrichtung 10 hat, wie FIG.1A zeigt, zumindest einen längenvariablen ersten Abschnitt 11, an den ein räumlich auslenkbarer zweiter Abschnitt 12 anschließt. Die Abschnitte 11, 12 können jeweils beide räumlich auslenkbar und längenvariabel ausgeführt sein. Alternativ kann auch nur der erste Abschnitt 11 längenvariabel, und ggf. auch räumlich auslenkbar sein, wohingegen der zweite Abschnitt 12 an sich bekannte Kettenglieder. Der der zweite Abschnitt 12 kann z.B. Kettenglieder gemäß einer Bauweise aus EP1616376B1 bzw. US7439446B2 (=WO2004/093279A1, deren Lehre hier insoweit per Verweis einbezogen wird) aufweisen bzw. aus solchen bekannten Kettengliedern zusammengesetzt sein.

Die Verbindung zwischen dem ersten Abschnitt 11 und dem zweite Abschnitt 12 (FIG.1A) kann dabei durch ein besonderes Verbindungsstück bzw. Endstück erfolgen, wie weiter unten beschrieben.

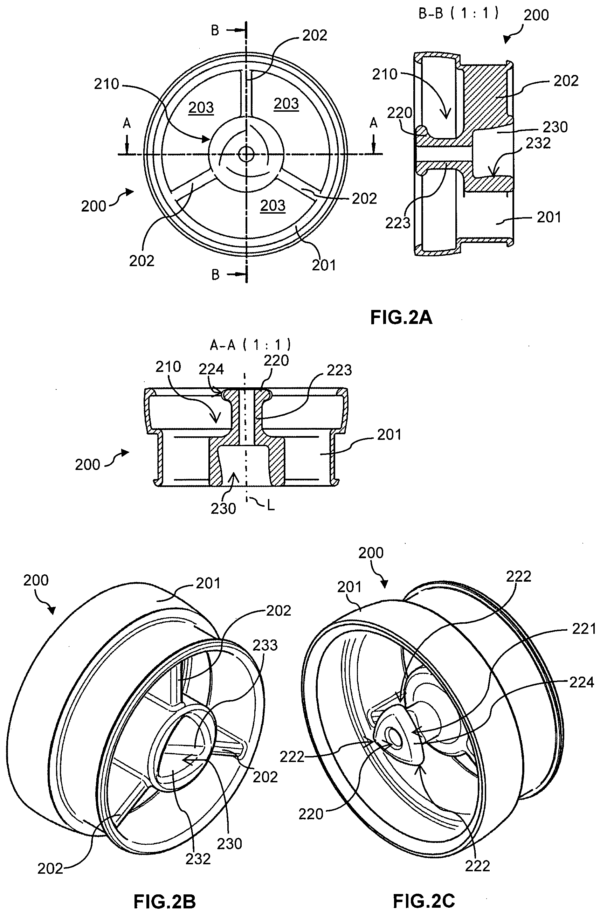

FIG.2A-FIG.2E zeigen ein erstes Beispiel eines Kettenglieds 200 zur Bildung eines längenvariablen Abschnitts 11. In an sich bekannter Bauweise umfasst das Kettenglied 200 einen Mantel 201, der in diesem Beispiel umfänglich um die Längsachse L geschlossen ausgeführt ist. Der Mantel 201 ist über drei radiale Stege 202 mit einem Kern 210 des Kettenglieds 200 verbunden, und können z.B. einteilig aus Kunststoff hergestellt sein. Zwischen Mantel 201 und Kern 210 bildet das Kettenglied 200 drei Kammern 203, getrennt durch die Stege 202, als Aufnahmeraum für nicht gezeigte Leitungen. Die Kammern sind in Axialrichtung durchgehend offen. Mantel 201 und Stege 202 sind z.B. rotationssymmetrisch um die Längsachse L angeordnet und gestaltet.

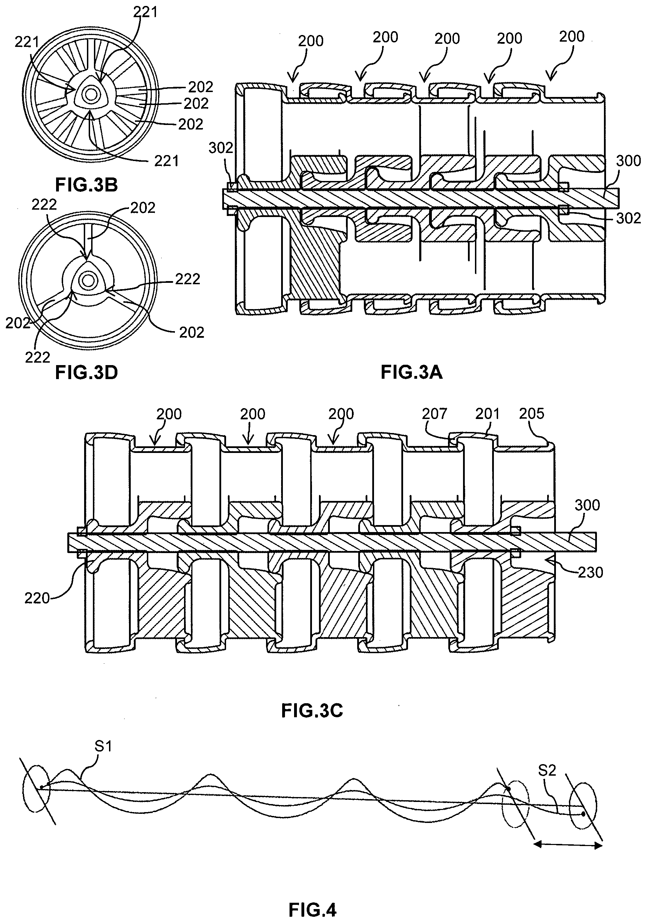

Ein besonderer Aspekt der Erfindung liegt in der Gestaltung der Verbindung zwischen aufeinanderfolgenden Kettengliedern 200, wie anhand von FIG.3A-3C anhand eines beispielhaften Abschnitts aus Kettengliedern 200 veranschaulicht. Zur Verbindung benachbarter Kettenglieder 200 hat der Kern 210 an einem Längsende einen Gelenkkopf 220 und am andere Längsende eine dazu konjugiert gestaltete Gelenkaufnahme 230. Gelenkkopf 220 und Gelenkaufnahme 230 sind so gestaltet, dass verbundene Kettenglieder 200 in Längsrichtung zueinander längsverstellbar sind, wie ein Vergleich zwischen FIG.3A und FIG.3C zeigt, und dergestalt, dass ein Längsverstellen zweier Kettenglieder 200 zueinander deren Relativdrehung um ein vorgegebenes Winkelmaß bewirkt, wie anhand der Frontansichten in FIG.3B bzw. FIG.3D veranschaulicht.

Die am besten aus FIG.2A-2B und FIG.2E erkennbare Geometrie des Gelenkkopfes 220 hat in diesem Beispiel eine Grundform mit im wesentlichen dreieckigen Querschnitt senkrecht zur Längsachse L wobei in diesem Querschnitt die Seiten 221 entsprechend einem ersten Radius bogenförmig gerundet sind, vgl. FIG.3B, und die Scheitel 222 bzw. Spitzen entsprechend einem deutlich kleineren zweiten Radius gerundet sind, vgl. FIG.3D. In jedem Längsschnitt entlang der Längsachse ist die Außenfläche des bogenförmig dreieckigen Gelenkkopfes 220 weiterhin gemäß einem vergleichsweise kleinen, dritten Radius gerundet, d.h. diese Rundung ist umlaufend vorgesehen wie FIG.2A mit FIG.2E zeigt. Somit kann in der Gelenkaufnahme 230 lediglich ein kurvenlinienförmiger Kontakt entsprechend der Kontur der größten Querschnittsfläche erzielt werden, wobei die Rundung in axialer Richtung bzw. entsprechend dem dritten Radius ein Verkippen bzw. eine kugelgelenkartige Bewegung um zwei Achsen senkrecht zur Längsachse erlaubt. Der Gelenkkopf 220 ist über einen halsartigen Zapfen 223 einteilig mit der Wandung der Gelenkaufnahme 230 verbunden.

FIG.3A und FIG.3C zeigen ferner ein Rückstellelement 300, in Form eines Expander-Seils bzw. seilartigen Gummikabels. Dieses besteht bevorzugt aus hochelastischen Gummifäden sowie einer Umflechtung zu deren Schutz. Das Rückstellelement 300 ist koaxial zur Längsachse L durch entsprechende, zentrale Durchführöffnungen 225 im Kern 210 durchgeführt und an den Enden des längenvariablen Abschnitts 11 an den Kettengliedern 200 zugfest befestigt z.B. mittels Klemmringen 302. Das Rückstellelement 300 ist bestimmungsgemäß elastisch längsdehnbar und erzeugt eine axial gerichtete Rückstellkraft auf den längenvariablen Abschnitt 11, welche einer Verlängerung des längenvariablen Abschnitts entgegenwirkt, d.h. den Abschnitt von der ausgezogenen Stellung in FIG.3C in die eingezogene Stellung in FIG.3A zurückstellt.

Der Gelenkkopf 220 jeder Verbindung zweier Kettenglieder 200 wirkt dabei mit der Innenfläche 232 der Gelenkaufnahme 230 so zusammen, dass die Verbindung als Drehführung bzw. Zwangsführung wirkt, welche bei verlängernder Längsverstellung (FIG.3A zu FIG.3C) die Kettenglieder 200 in einer ersten Drehrichtung relativ zueinander dreht bei rückstellender Längsverstellung deren entgegengesetzte Relativdrehung bewirkt. Hierzu ist die Gelenkaufnahme 230 mit einer Innenfläche 232 versehen, welche einer schraubenförmigen Drehung der äusseren Kontur des Gelenkkopfes 220 entspricht. Mit anderen Worten, die Innenfläche 232 entspricht einer Fläche die generiert wird durch Drehung der Kontur des Gelenkkopfs 220 bei axialem Vorschub. Dementsprechend bildet die Gelenkaufnahme 230 zur drehbaren und längsverstellbaren Lagerung des Gelenkkopfes 220 eine Negativform, insbesondere konjugiert zu dem durch entsprechende Drehtranslation des Gelenkkopfes 220 generierten Volumen, zzgl. einem technisch notwendigen Bewegungsspiel. Somit werden die drei Scheitel 222 des Gelenkkopfes 220 als Führungselemente an entsprechenden schraubenförmig verlaufenden Führungsflächen geführt, die muldenartige und schraubenförmige Vertiefungen, ähnlich einer Art Innengewinde, innenseitig in der Gelenkaufnahme 230 bilden. Die Kettenglieder 200 sind derart verbunden bzw. gekoppelt, dass ein Längsverstellen zweier Glieder zueinander deren Relativdrehung bewirkt, je nach Einziehen oder Ausziehen in die eine oder andere Drehrichtung.

Als Längsanschläge zur Begrenzung der maximalen Dehnung bzw. Verlängerung greifen die Mäntel 201 jeweils in der Steckstellung arretierend ineinander. Der Mantel 201 hat hierzu eine umlaufende Ringnut mit einem hinteren ringförmigen Rand 205 als Anschlag und einem nach innen vorstehenden Ringkragen 207, welcher als Gegenanschlag am Rand 205 anschlägt. Längsanschläge sind bevorzugt u.a. weil das Rückstellelement 300 die Kettenglieder 200 zwar gegeneinander spannt, ein Bruch des Rückstellelements 300, aber nicht im Auftrennen des längenvariablen Abschnitts 11 der Leitungsführungseinrichtung bzw. Energiekette 10 resultieren sollte. Die Längsanschläge können aber auch anders, z.B. am zentralen Kern realisiert sein (s. weiter unten).

FIG.4 veranschaulicht schematisch zwei unterschiedliche schraubenlinienförmige bzw. helixartige Verläufe S1 und S2 einer Leitung, die in einem längenvariablen Abschnitt geführt ist. Die Stellung S1 entspricht der eingezogenen bzw. rückgesellten Lage der Leitungsführungseinrichtung 10 (vgl. FIG.1A-1B). Die Stellung S2 entspricht der ausgezogenen Stellung der Leitungsführungseinrichtung 10 (vgl. FIG.1C-1D).

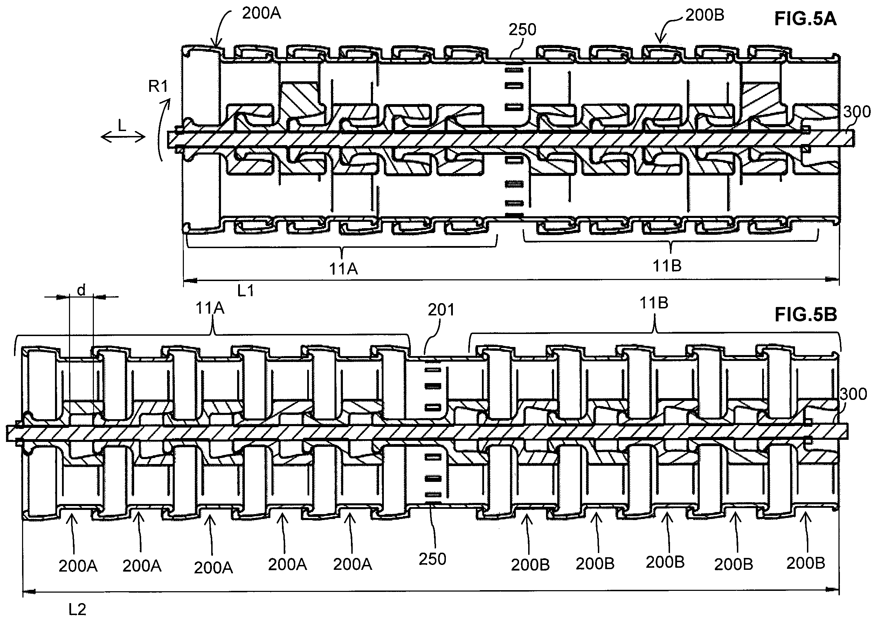

FIG.5A-5B veranschaulichen eine besonders bevorzugte Ausführungsform, wobei der längenvariable Abschnitt 11 einen ersten Teilabschnitt 11A aufweist, in welchem verbundene Kettenglieder 200A jeweils bei Verlängerung in einer ersten Drehrichtung R1 um die Längsrichtung L relativdrehen und bei Rückstellung in entgegengesetzter Richtung R2 relativdrehen. Weiterhin hat der längenvariable Abschnitt einen zweiten Teilabschnitt 11B, in welchem verbundene Kettenglieder 200B bei Verlängerung in der zweiten Drehrichtung R2, gegensinnig zur ersten Drehrichtung R1, relativdrehen, und bei Rückstellung entgegengesetzt in der ersten Drehrichtung R1 relativdrehen. Dadurch heben sich die Drehungen der Teilabschnitte 11A, 11B gegenseitig auf, sodass an den Enden des längenvariablen Abschnitts 11 insgesamt keine Drehung übertragen wird, und auch die Leitungen geschont werden. Die Anzahl Glieder 200A, 200B ist dabei in beiden Teilabschnitten 11A, 11B bevorzugt gleich. Die Bauweise der Glieder 200A, 200B jedes Teilabschnitts 11A, 11B unterscheidet sich lediglich durch den Drehsinn, welcher die jeweilige Gelenkaufnahme 230 vorgibt, d.h. die Gelenkaufnahmen 230 sind richtungsverkehrt. Somit sind in einem Teilabschnitt 11A die Glieder beim verlängern bzw. ausziehen relativ zueinander rechtsdrehend (z.B. R1) und im anderen Teilabschnitt 11B bei Auszug relativ zueinander linksdrehend (z.B. R2) oder umgekehrt, und drehen entsprechend gegensinnig zurück beim wieder einziehen.

Hierbei ist weiterhin zwischen den Teilabschnitten 11A, 11B des längenvariablen Abschnitts ein besonderes Mittelstück 250 vorgesehen. Das Mittelstück 250 erlaubt eine Zugentlastung für die zu führenden Leitungen, z.B. anhand von entsprechenden Schlitzen im Mantel. Das Mittelstück 250 hat vorzugsweise eine grössere Baulänge, als die Baulänge bzw. Teilung der Glieder 200A, 200B.

Das Mittelstück 250 kann einen Kern 252 aufweisen der an seinen Längsenden entsprechend den Gliedern 200A, 200B gestaltet ist und mit den gegensinnig drehenden Teilabschnitten 11A, 11B verbunden ist.

Das gewollt zulässige relative Verstell-Maß zwischen zwei Gliedern 200A bzw. 200B in Längsrichtung, welches als Spiel zur längsverstellbaren Verbindung zugelassen wird, ist in FIG.5B mit d bezeichnet, und summiert sich über alle Kettenglieder des längenvariablen Abschnitts 11 zur maximalen Längendifferenz L2-L1 in voll gestreckter Lage (FIG.5B).

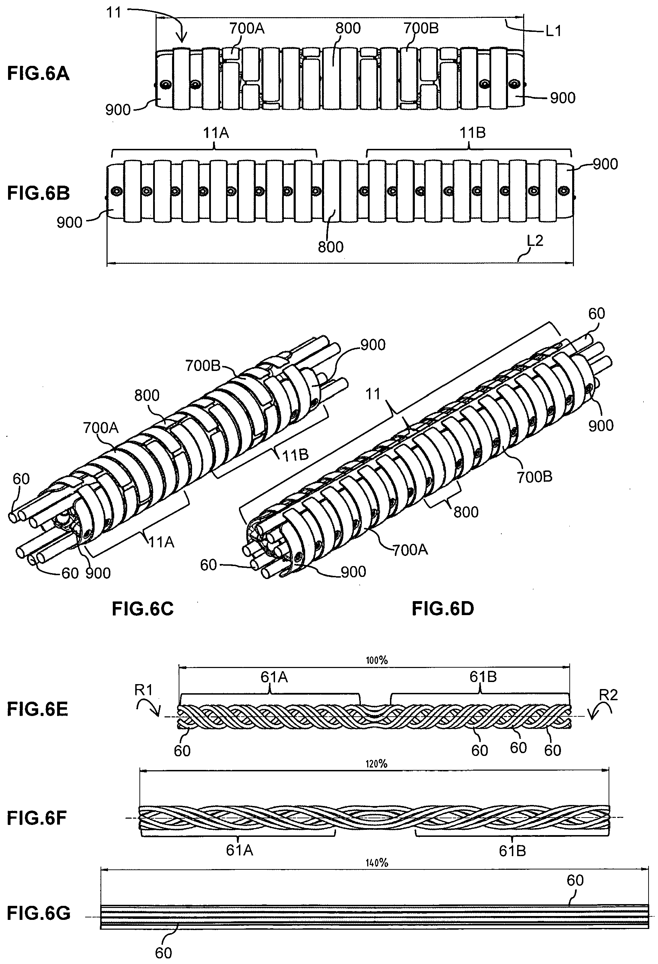

Ein weiteres bevorzugtes Ausführungsbeispiel wird nun anhand der FIG.6-9 näher erläutert.

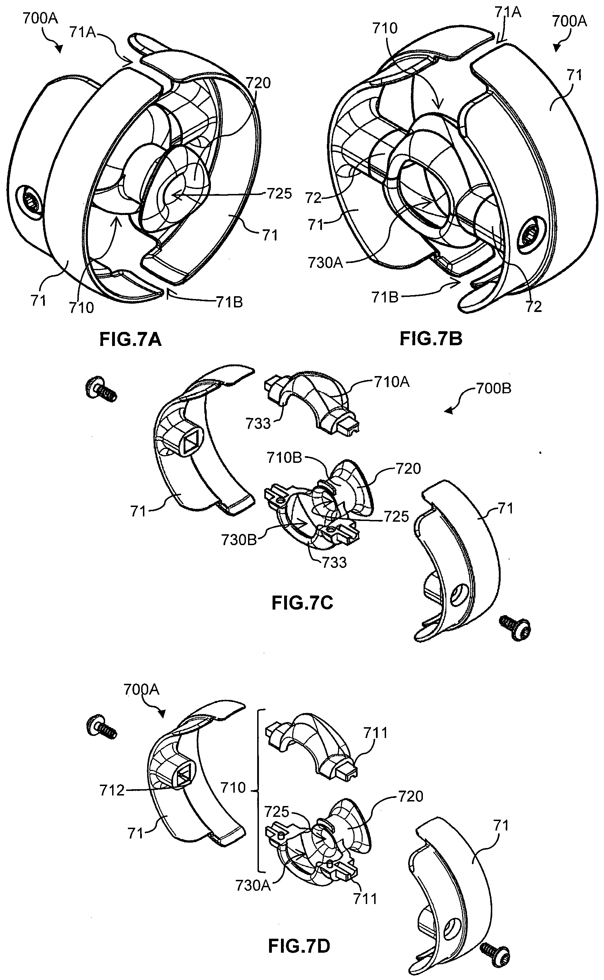

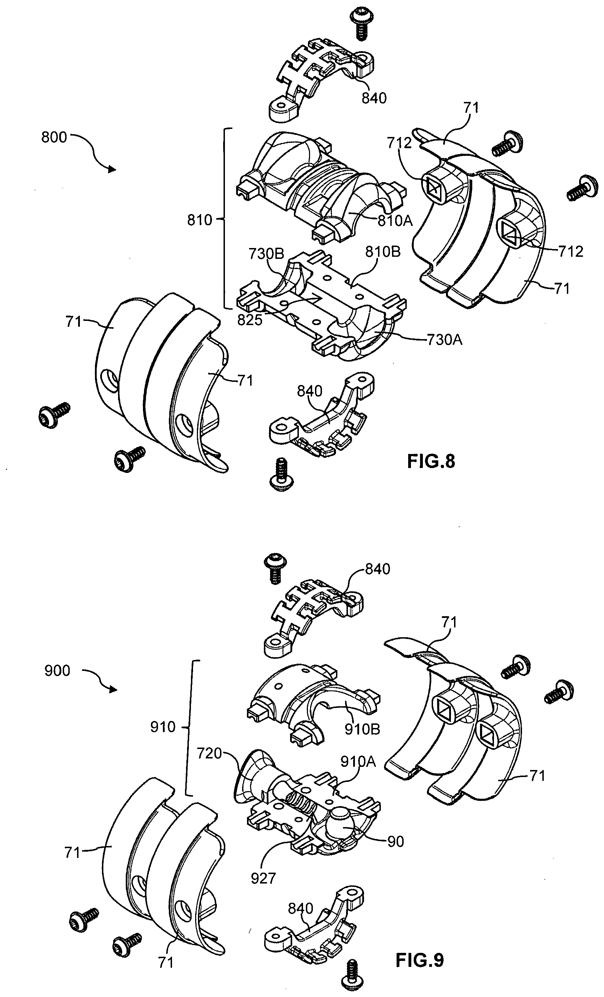

FIG.6A-6D zeigen einen längenvariablen Abschnitt 11 einer Leitungsführungseinrichtung 10 für eine Anordnung nach FIG.1A, aus zwei Teilabschnitten 11A, 11B. Die Teilabschnitte 11A, 11B drehen ebenfalls in sich zueinander gegensinnig, beim Ausziehen vom voll eingezogenen Zustand mit Länge L1 (FIG.6A, FIG.6C) in den voll ausgezogenen Zustand mit Länge L2 (FIG.6B, FIG.6D), z.B. mit 1,3*L1 ≤ L2 ≤ 1,5*L1, etwa mit L2=140%*L1 (FIG.6G). Die Teilabschnitte 11A, 11B sind dazu aus verbundenen Kettengliedern 700A bzw. 700B gemäß FIG.7A-7D zusammengesetzt und über ein spezielles Mittelstück 800 gemäß FIG.8 miteinander verbunden, an welchem geführte Leitungen 60 zugentlastet sind. Endseitig hat jeder Teilabschnitt 11A, 11B ein spezielles Endstück 900 zum Verbinden mit je einem Längsabschnitt aus konventionellen Kettengliedern, z.B. gemäß der Bauweise aus EP1616376B1 bzw. US7439446B2 (=WO2004/093279A1. Wie weiter oben beschrieben und in FIG.6A-6D veranschaulicht, sind auch hier die zwei Teilabschnitte 11A, 11B unter gegensinnigen Drehungen, links- bzw. rechtsdrehend zueinander, teleskopartig ausziehbar bzw. verlängerbar.

FIG.6E-6G zeigen eine beispielhafte Anordnung und den Verlauf von hier z.B. sechs geführten Leitungen 60, im Abschnitt 11. Jede Leitung verläuft im längenvariablen Abschnitt 11 schraubenlinienförmig bzw. helixartig, nämlich entsprechend einer ersten Schraubenwendel 61A, z.B. rechtsdrehend R1, im ersten Teilabschnitt 11A und einer mit entgegengesetztem Drehsinn verlaufenden zweiten Schraubenwendel 61B, z.B. linksdrehend, im zweiten Teilabschnitt 61B. Alle Leitungen 60 sind dabei zu entsprechenden mehrfach-helixartigen Paketen miteinander verdrillt im voll eingezogenen Zustand, und in einem mittleren Bereich am Mittelstück 800 gemäß FIG.8 zugentlastet. Die Drehrichtungen der Schraubenwendeln 61A, 61B entsprechen dem Drehsinn der Kettenglieder 700A, 700B und sind einander entgegengesetzt bzw. gegensinnig. Im voll ausgezogenen Zustand (FIG.6G) verlaufen die Leitungen 60 dann im Wesentlichen geradlinig gestreckt, d.h. beide Schraubenwendeln 61A, 61B sind abgewickelt. Hierzu bilden die Teilabschnitte 11A, 11B im voll ausgezogenen Zustand geradlinige, durchgehende Aufnahmen für die Leitungen 60, vgl. FIG.6D.

FIG.7A-7D zeigen im Einzelnen das zweite Beispiel der Kettenglieder 700A, 700B zur Bildung eines längenvariablen Abschnitts 11 mit gegensinnig verdrehenden Teilabschnitten 11A, 11B. Es wird zur Verkürzung nur auf wesentliche Unterschiede zu FIG.2-5 eingegangen. Die Kettenglieder 700A, 700B haben bogenförmige Mantelsegmente 71, die aus Gleichteilen (FIG.7C-7D) hergestellt sind. Die Mantelsegmente 71 sind in FIG.7A-7D nicht umfänglich um die Längsachse L geschlossen, sondern bilden beidseitig jeweils eine Einführöffnung 71A, 71B zur Erleichterung von Montage bzw. Austausch der Leitungen 60. Jedes der beiden Mantelsegmente 71 ist über genau einen radialen Steg 72 mit einem Kern 710 des Kettenglieds 700A, 700B verbunden. Jedes Kettenglied 700A, 700B bildet somit hier zwei getrennte axial offene Kammern zur Aufnahme der Leitungen 60 (vgl. FIG.6D).

Jedes Kettenglied 700A, 700B hat einen Kern 710 mit auch hier axial gegenüberliegend einem Gelenkkopf 720 an einem Längsende und am andere Längsende eine dazu konjugiert gestaltete Gelenkaufnahme 730A bzw. 730B. Zur leichteren Herstellung, insbesondere der komplexen Geometrie der Gelenkaufnahme 730A bzw. 730B sowie zur vereinfachten Montage von Gelenkkopf 720 in der Gelenkaufnahme 730 ist der Kern 710 in FIG.7A-7D zweiteilig hergestellt, hier aus einem ersten Teil 710A umfassend den Gelenkkopf 720 und aus einem deckelartigen zweiten Teil 710B zum Bilden der Gelenkaufnahme 730A bzw. 730B. Das zweite Teil 710B ist komplementär zum ersten Teil 710A und mit diesem formschlüssig verbindbar. Die zweiteilige Bauweise ermöglicht u.a. einen umlaufenden Halterand 733 an der Öffnung jeder Gelenkaufnahme 730A bzw. 730B für den Eingriff des Gelenkkopfes 720. Der Halterand 733 dient insbesondere als Axialanschlag beim Ausziehen bzw. Verlängern, kann aber auch die räumliche Auslenkbarkeit begrenzen durch Anschlagen des zylindrischen Halses der den eingreifenden Gelenkkopf 720 trägt. In entgegengesetzter Richtung beim Einziehen schlägt der Gelenkkopf 720 innen an der Innenfläche der Gelenkaufnahme 730A bzw. 730B an.

Wie FIG.7C-7D veranschaulichen, wird aufgrund der Bauweise der Stege 72 eine stabile Sicherung des zweiten Teils 710B am ersten Teil 710A realisiert. Dies erfolgt indem beide Teile 710A, 710B jeweils gemeinsam einen Schaft, Stift oder dgl., **z.B.** einen Vierkant, aus zwei Hälften 711 bilden, auf welche eine konjugierte Aufnahme 712, **z.B.** eine Vierkantaufnahme, passend aufgesteckt wird. Die zwei Hälften 711 werden bei der Befestigung der Mantelsegmente 71 aneinander gesichert durch Einstecken in die Aufnahme 712, wobei jedes Mantelsegmente 71, **z.B.** mittels einer selbstschneidenden Schraube am Kern 710, befestigt wird. Die Aufnahme 712 ist in einem mit dem Mantelsegment 71 einteiligen innenseitigen Vorsprung realisiert, welcher dann die Bestandteile 710A, 710B des Kerns 710 stabil aneinanderhält und sichert. Weiterhin zeigen FIG.7A-7D auch im ersten Teil 710A die koaxiale durchgehend offene Durchführöffnung 725 für ein Rückstellelement 300 (vgl. FIG.5A-5B), deren Mündungen schonend aufweiten.

Wie ein Vergleich von FIG.7C mit FIG.7D zeigt, unterscheiden sich die Kettenglieder 700A, 700B durch die Drehrichtung der jeweiligen Gelenkaufnahme 730A bzw. 730B, die entweder rechtsdrehend R1 oder linksdrehend R2 ausgeführt ist, wobei der Gelenkkopf 720 jeweils gleich gestaltet bleibt. Gelenkkopf 720 und Gelenkaufnahmen 730A bzw. 730B erlauben eine das gewünschte axiale längsverstellen relativ zueinander und geben dabei auch die gewünschte Relativdrehung vor. Hierzu wirken die Innenfläche der Gelenkaufnahmen 730A, 730B und der Gelenkkopf 720 auch in diesem Ausführungsbeispiel entsprechend so zusammen, dass die Verbindung als eine Art Drehführung bzw. Zwangsführung dient, welche bei Ausziehen bzw. Einziehen eine Drehung der beiden verbundenen Kettenglieder 700A, 700B vorgibt. Der Gelenkkopf in FIG.7A-7D ist hier mit einer etwa dreieckigen Grundform entsprechend derjenigen in FIG.2E ausgeführt.

FIG.8 zeigt eine Bauweise für ein Mittelstück 800 zur Verbindung der Teilabschnitte 11A, 11B, d.h. von deren endseitigen Kettengliedern 700A bzw. 700B im mittleren Bereich des längenvariablen Abschnitts 11 zwischen den Teilabschnitten 11A, 11B (FIG.6B-6C). Die prinzipielle Bauweise ist analog zu FIG.7A-7D, insbesondere mit einem zweiteiligen Kern 810 aus einem ersten Teil 810A und einem zweiten Teil 810B, die aneinander anhand mehrerer, hier vier baugleicher, Mantelsegmente 71 gesichert werden, z.B. wie zu FIG.7C-7D oben beschrieben. Der Kern 810 hat bzw. bildet an seinen beiden Längsenden je eine von den zwei komplementären Gelenkaufnahmen 730A bzw. 730B zur Verbindung mit dem Gelenkkopf 720 des verbundenen Kettenglieds 700A bzw. 700B. So wird, im Vergleich zu einer einfacheren, starren Verbindung der Teilabschnitte 11A, 11B, die Auszuglänge L2-L1 erhöht.

Das Mittelstück 800 hat weiterhin Zugentlastungselemente 840 die beidseitig am Kern 810, z.B. hier form- und kraftschlüssig durch Verschraubung befestigt sind. Jedes Zugentlastungselement 840 hat mehrere beidseitig axial vorstehende T-förmige Halter für die Festlegung und Zugentlastung der Leitungen, z.B. mittels Kabelbinder, am Mittelstück 800. Die Zugentlastungselemente 840 können als zwei klammerartige Gleichteile miteinander verschraubt werden und den Kern 810 umgreifen, um zugleich eine zusätzliche Sicherung von dessen Bestandteilen 810A, 810B aneinander zu erzielen. Das gezeigte Mittelstück 800 besteht, Schrauben ausgenommen, hier somit aus nur vier Bauteilen, den Bestandteilen 810A, 810B des Kerns 810, zwei Paar Mantelsegmente 71 sowie zwei Zugentlastungselemente 840. Diese Bauteile werden, wie auch die Teile der Glieder 700A, 700B, vorzugsweise als Kunststoff-Spritzgussteile gefertigt. FIG.8 veranschaulicht auch die Durchführöffnung 825 im Mittelstück 800, für das seilförmige Rückstellelement 300 (nicht gezeigt in FIG.6-9).

FIG.9 zeigt ein Endstück 900 zum Verbinden jedes Längsendes des längenvariablen Abschnitts 11 aus den Kettengliedern 700A bzw. 700B mit der Gelenkpfanne eines konventionellen Kettenglieds in der Bauweise aus EP1616376B1 bzw. US7439446B2 (=WO2004/093279A1), deren Lehre hier insoweit per Verweis einbezogen wird. Hierzu hat der Kern 910 aus zwei Bauteilen 910A, 910B an einem axialen Ende einen Gelenkkopf 720 zur Verbindung mit einer Gelenkaufnahme 730A bzw. 730B eines Kettenglieder 700A bzw. 700B und am anderen axialen Ende einen an sich bekannten kugelförmigen Gelenkkopf 90 gemäß EP1616376B1 bzw. US7439446B2 (=WO2004/093279A1). An beiden Enden des längenvariablen Abschnitts 11 können bei Bedarf baugleiche Endstücke 900 genutzt werden. Weiterhin bildet das Endstück 900 innenseitig an den Bauteilen 910A, 910B koaxial liegende Klemmschalen 927 einer Seilklemme mit Querrippen zur axialen Endbefestigung des seilartigen Rückstellelements 300. Somit kann das Endstück 900 zugleich die Enden des Rückstellelements 300 (nicht gezeigt) befestigen ohne zusätzliche Klemmringe, wie in FIG.5A-5B gezeigt. Wie mit den Klemmringen 302 kann auch mittels der durch die Klemmschalen 927 gebildeten Seilklemme ein Einstellen der Vorspannung des Rückstellelements 300 erfolgen, indem dieses entsprechend vorgespannt und dann am Endstück 900 axial festgelegt wird. Hierzu ist die Kombination mit schellenartigen Zugentlastungselementen 840 vorteilhaft, welche mittels der Schraubverbindung als Spannschellen die Bauteile 910A, 910B gegeneinander spannen können. Demensprechend umgreifen die beiden schellenartigen Zugentlastungselemente 840 vorzugsweise auch die beiden Klemmschalen 927.

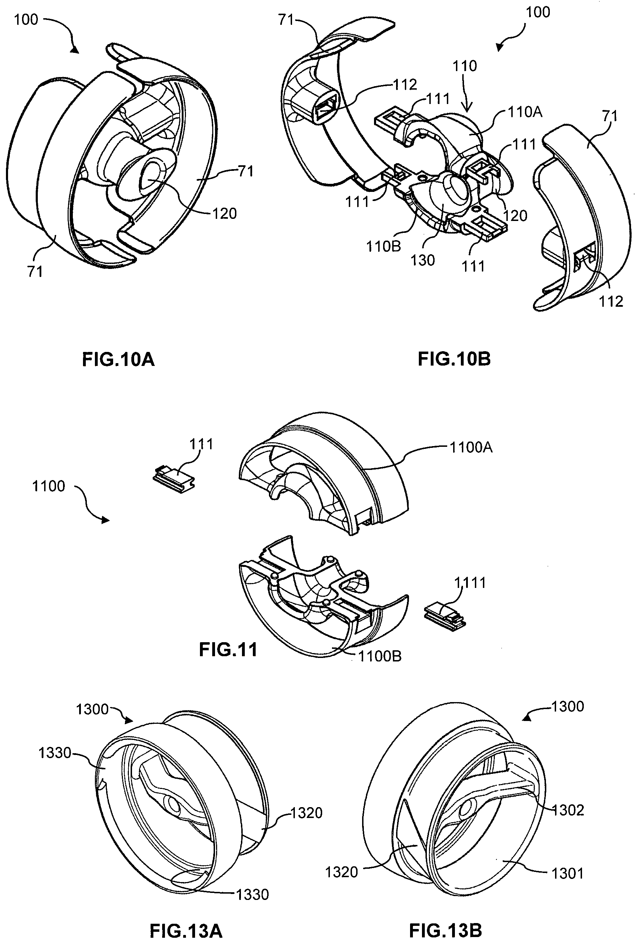

FIG.10A-10B zeigen ein weiteres Kettenglied 100 für einen längenvariablen Abschnitt 11 gemäß FIG.1A. Diese Variante unterscheidet sich einerseits in der elliptischen Grundform des Gelenkkopfes 120 und entsprechender Gestaltung der Gelenkaufnahme 130 (hier nur eine von beiden dargestellt) von den vorstehenden Beispielen. Weiterhin zeigt FIG.10B eine Alternative zur Sicherung eines mehrteiligen Kerns 110 aus zwei Teilen 110A, 110B durch eine Schnappverbindung beidseitiger armförmiger Vorsprünge 111 der Teile 110A, 110B in entsprechenden Aufnahmen 112 in den Mantelsegmenten 71, die ansonsten z.B. FIG.7-9 entsprechen.

Eine ähnliche Variante zeigt FIG.11, jedoch hier zur Realisierung einer rohrförmigen, umfänglich geschlossenen Leitungsführungseinrichtung 10. Hierbei ist das Kettenglied 1100 im Wesentlichen aus zwei Formteilen 1100A, 1100B gebildet, die über eine Feder-Nut-Verbindung an der Schnittstelle der Stege miteinander verbunden bzw. gesichert werden durch zusätzliche Sicherungselemente 1111. Die sonstige Bauweise kann einem der vorigen Ausführungsbeispiele entsprechen, insbesondere hinsichtlich der gelenkigen Verbindung der Kettenglieder 1100.

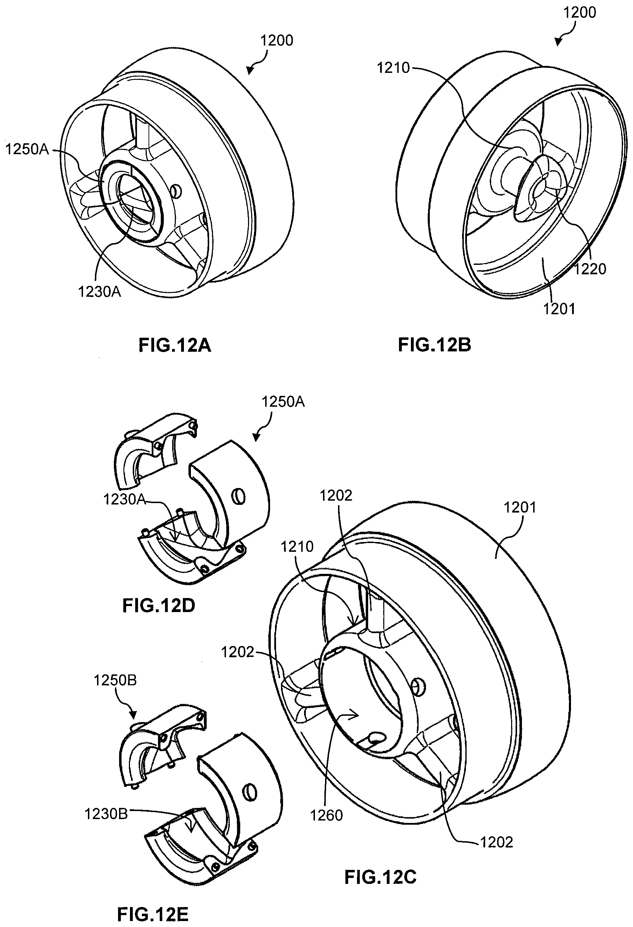

FIG.12A-12E zeigen ein weiteres Kettenglied 1200 mit zwei austauschbaren mehrteiligen Einsätzen 1250A, 1250B einer Gelenkaufnahme 1230A bzw. 1230B (FIG.12D, FIG.12E) für den Gelenkkopf 1220 (hier wie in FIG.7), die wählbar eine von zwei gegensinnigen Drehrichtungen R1, R2 vorgeben. Die Einsätze 1250A, 1250B sind mehrteilig, hier z.B. aus je drei Einzelteilen, vorzugweise Spritzgussteilen in Form von Sektoren eines Rings realisiert. Die Einsätze 1250A, 1250B können in eine als Halterung gestalte Aufnahme 1260 im Kern des Kettenglieds 1200 durch axiales Einschieben eingerastet werden. Die mehrteilige Bauweise kann die Herstellung im Spritzguss erheblich erleichtern, insbesondere wenn der Hauptkörper des Kettenglieds 1200 einteilig hergestellt sein soll. Jeder der beiden Einsätze 1250A, 1250B bildet dabei eine von beiden Aufnahmen 1230A, 1230B für die gegensinnige Relativdrehung, rechtsdrehend oder linksdrehend, für den jeweiligen Teilabschnitt 11A, 11B. Mittels der Verrastung in Axialrichtung kann ein Gelenkkopf 1220 mit einem darauf angebrachten Einsatz 1250A, 1250B axial in die Halterung 1260 im Kern des angrenzenden Kettenglieds 1200 eingesteckt werden, was die Montage vereinfachen kann. Im Übrigen ist die Bauweise weitgehend ähnlich zu FIG.2A-2E, u.a. mit drei radialen Stegen 1202, welche einen umfänglich geschlossenen Mantel 1201 mit dem Kern 1210 verbinden.

FIG.13A-13B zeigen schliesslich eine Variante eines Kettenglieds 1300 nach FIG.2-3, bei welchem die gewünschte Relativdrehung über radial äußere Führungsteile, hier äußere Drehführungsvorsprünge 1320 und innere Drehführungsaussparungen 1330, ähnlich Schraubgewinden, an den Mantelteilen des Kettenglieds 1300 realisiert ist. Die Drehführungsaussparungen 1330 bzw. Drehführungsvorsprünge 1320 können als schräg bzw. schraubenförmig verlaufende Nute und darin eingreifende Vorsprüngen an Überlappungsbereichen der Mantelsegmente ausgeführt sein.

Axiale Anschläge können hierbei, wie in FIG.2-3, ebenfalls an den Mantelteilen realisiert sein. Die Kettenglieder 1300 verfügen somit nicht über Gelenkkopf oder Gelenkaufnahme am Kern, anders als z.B. in FIG.2-3.

Wie die Ausführungsbeispiele zeigen, kann der längenvariablen Abschnitt 11 durch Glieder unterschiedlicher Bauweisen realisiert werden, die jeweils paarweise zueinander um die Längsrichtung L relativdrehbar und zueinander längsverstellbar miteinander verbunden sind. Auch das Rückstellelement 300 kann auf verschiedene Arten realisiert werden, und muss nicht zwingend koaxial zur Längsrichtung oder als Expander-Seil vorgesehen sein.

### BEZUGSZEICHENLISTE

**FIG. 1A-1D**
   1 Industrieroboter
   2, 3 Anschlussstellen
   10 Leitungsführungseinrichtung
   11 längenvariabler Abschnitt
   12 räumlich auslenkbarer Abschnitt
**FIG.2A-2E,** **FIG.3A-3C, FIG.4**
   200 Kettenglied201 Mantel
   202 Steg
   203 Kammer/Aufnahmeraum205Rand (Anschlag)
   207 Ringkragen (Anschlag)
   210 Kern
   220 Gelenkkopf
   221 Seiten (Gelenkkopf)
   222 Scheitel/Spitzen
   223 Zapfen
   225 Durchführöffnungen
   230 Gelenkaufnahme
   232 Innenfläche (Gelenkaufnahme)
   300 Rückstellelement
   302 Klemmring
   L Längsachse
   S1, S2 helixartige Verläufe
**FIG.5A-5B**
   11A erster Teilabschnitt
   11B zweiter Teilabschnitt
   200A, 200B Kettenglieder
   250 Mittelstück
   d axiales Spiel / relatives Verstell-Maß
   R1, R2 Drehrichtung/Drehsinn
   L1 Länge eingezogen
   L2 Länge ausgezogen
**FIG.6A-6G****,** **FIG.7A-7D****,** **FIG.8-9**
   11 längenvariabler Abschnitt
   11A erster Teilabschnitt
   11B zweiter Teilabschnitt
   60 Leitung
   71 Mantelsegment
   71A, 71B Einführöffnung
   72 Steg
   90 Gelenkopf (konventionell)
   61A, 61B Schraubenwendel / Helixverlauf
   700A; 700B Kettenglieder
   710 Kern
   710A, 710B Kern-Teile
   711 Hälfte (Sicherungsschaft)
   712 Aufnahme
   720 Gelenkkopf
   725 Durchführöffnung
   730A; 730B Gelenkaufnahme
   733 Halterand (axialer Anschlag)
   800 Mittelstück
   810 Kern (Mittelstück)
   810A, 810B Kern-Teile
   825 Durchführöffnungen
   840 Zugentlastungselement
   900 Endstück
   910 Kern (Endstück)
   910A, 910B Bauteile
   927 Klemmschale (Seilklemme)
   R1, R2 Drehrichtung/Drehsinn
   L1/L2 Länge eingezogen/ausgezogen
**FIG.10A-10B, FIG.11**
   100 Kettenglied; 110 Kern; 110A, 110B Kern-Teile; 120 Gelenkkopf (elliptisch); 130 Gelenkaufnahme
   1100 Kettenglied; 1100A, 1100B Formteile; 1111 Sicherungselement
**FIG.12A-12E**
   - 1200: Kettenglied; 1201 Mantel; 1202 Steg; 1210 Kern;
   - 1220: Gelenkkopf; 1230A, 1230B Gelenkaufnahme; 1250A, 1250B Einsätze (für Gelenkaufnahme); 1260 Aufnahme (für Einsätze)
**FIG.13A-13B**
   - 1300: Kettenglied; 1320 Drehführungsvorsprung;
   - 1330: Drehführungsaussparung;

## Patentansprüche

1. Leitungsführungseinrichtung (10) zur Führung von Leitungen, wie Kabeln, Schläuchen oder dergleichen, zwischen einer ersten und einer dazu relativbeweglichen zweiten Anschlußstelle (2, 3), insbesondere an einem Roboter (1) mit mehreren Freiheitsgraden, umfassend:
eine Vielzahl Glieder, die einen Aufnahmeraum für Leitungen bilden, in einer Längsrichtung (L) aufeinanderfolgend angeordnet sind und durch eine jeweilige Gelenkverbindung gelenkig miteinander verbunden sind, wobei die Gelenkverbindung ein räumliches Auslenken der verbundenen Glieder zueinander erlaubt; und
mindestens ein elastisches Rückstellelement (300);
**dadurch gekennzeichnet, dass**
die Leitungsführungseinrichtung einen längenvariablen Abschnitt (11) aufweist, welcher eine Anzahl Glieder (200A, 200B; 700A, 700B) umfasst die zueinander um die Längsrichtung relativdrehbar und die zur Verlängerung des längenvariablen Abschnitts (11) in Längsrichtung (L) zueinander längsverstellbar miteinander verbunden sind,
und dass das Rückstellelement (300) elastisch längsdehnbar und so angeordnet ist, dass es eine Rückstellkraft auf den längenvariablen Abschnitt (11) ausübt, welche einer Verlängerung des längenvariablen Abschnitts (11) entgegenwirkt.

2. Leitungsführungseinrichtung nach Anspruch 1, **dadurch gekennzeichnet, dass** zumindest die Anzahl Glieder (200A, 200B; 700A, 700B) des längenvariablen Abschnitts (11) gelenkig verbunden sind und/oder insbesondere derart verbunden bzw. koppelbar sind, dass ein Längsverstellen zweier Glieder (200A, 200B; 700A, 700B) zueinander deren Relativdrehung (R1, R2) bewirkt.

3. Leitungsführungseinrichtung nach Anspruch 2, **dadurch gekennzeichnet, dass** die Verbindung jeweils aufeinanderfolgender Glieder (200A, 200B; 700A, 700B) des längenvariablen Abschnitts (11) so gestaltet ist, dass ein Längsverstellen zweier Glieder zueinander richtungsabhängig eine Relativdrehung in der einen bzw. in der entgegengesetzten Drehrichtung um die Längsrichtung (L) vorgibt;
wobei die Verbindung insbesondere eine Drehführung umfasst, welche bei verlängernder Längsverstellung der beiden Glieder (200A, 200B; 700A, 700B) deren Relativdrehung in einer ersten Drehrichtung (R1) bewirkt und bei rückstellender Längsverstellung der beiden Glieder deren entgegengesetzte Relativdrehung bewirkt.

4. Leitungsführungseinrichtung nach Anspruch 2 oder 3, insbesondere nach Anspruch 3, **dadurch gekennzeichnet, dass** der längenvariable Abschnitt einen ersten Teilabschnitt (11A) aufweist, in welchem verbundene Glieder (200A; 700A) jeweils bei Verlängerung in einer ersten Drehrichtung (R1) relativdrehen, und einen zweiten Teilabschnitt (11B) aufweist, in welchem verbundene Glieder (200B; 700B) bei Verlängerung in einer zweiten Drehrichtung (R2), die der ersten Drehrichtung entgegengesetzt ist, relativdrehen.

5. Leitungsführungseinrichtung nach einem der vorstehenden Ansprüche, **dadurch gekennzeichnet,**
- **dass** das mindestens eine Rückstellelement (300) zur Ausübung einer Vorspannung in Längsrichtung angeordnet ist, die den längenvariablen Abschnitt zusammenzieht; und/oder
- **dass** das mindestens eine elastische Rückstellelement (300) seilartig oder bandartig ausgeführt ist, wobei das Rückstellelement insbesondere ein Gummikabel, vorzugsweise mit Gummifäden und/oder Gummibändern sowie einer Umflechtung, umfasst bzw. ist.

6. Leitungsführungseinrichtung nach Anspruch 5, **dadurch gekennzeichnet, dass** an mindestens einem Endbereich des längenvariablen Abschnitts (11), insbesondere an einem endseitigen Glied (200; 900) des längenvariablen Abschnitts eine Einstellvorrichtung (302; 927) zum Einstellen der Vorspannung des Rückstellelements (300) vorgesehen ist.

7. Leitungsführungseinrichtung nach einem der vorstehenden Ansprüche 2 bis 6, insbesondere nach Anspruch 4, **dadurch gekennzeichnet, dass** zwischen zwei Teilabschnitten (11A, 11B) des längenvariablen Abschnitts ein Mittelstück (250; 800) vorgesehen ist, wobei das Mittelstück (250; 800) eine Zugentlastung (840) für zu führende Leitungen (60) aufweist und/oder vorzugsweise eine grössere Baulänge aufweist, als die Baulänge bzw. Teilung der Anzahl Glieder des längenvariablen Abschnitts (11), und/oder wobei das Mittelstück (250; 800) insbesondere an jedem seiner Längsenden mit je einem der zueinander gegensinnig drehenden Teilabschnitte (11A, 11B) verbunden ist, insbesondere über jeweils gegensinnige Drehführungen (730A, 730B), verbunden ist.

8. Leitungsführungseinrichtung nach einem der vorstehenden Ansprüche 2 bis 7, insbesondere nach Anspruch 3 und 5, **dadurch gekennzeichnet, dass** zumindest die Glieder (200A, 200B; 700A, 700B) des längenvariablen Abschnitts (11) jeweils einen zentralen Kern (210; 710) mit einer zentralen Durchführöffnung (225; 725) aufweisen, durch welche das elastische Rückstellelement (300) geführt ist; und/oder dass der Kern (210; 710) Führungselemente (220, 230; 720, 730) der Drehführung aufweist; und/oder der Kern (210; 710) beim Längsverstellen zweier Glieder zueinander richtungsabhängig eine Relativdrehung in der einen bzw. in der entgegengesetzten Drehrichtung um die Längsrichtung vorgibt.

9. Leitungsführungseinrichtung nach einem der vorstehenden Ansprüche 2 bis 8, insbesondere nach Anspruch 8, **dadurch gekennzeichnet, dass** zumindest die Glieder (200A, 200B; 700A, 700B) des längenvariablen Abschnitts (11) jeweils einen zentralen Kern (210; 710) aufweisen, der einen Gelenkkopf (220; 720) und eine in Längsrichtung gegenüberliegende Gelenkaufnahme (230A, 230B; 730A, 730B) bildet, welche zur gelenkigen Verbindung mit dem Gelenkkopf des folgenden Glieds korrespondierend gestaltet ist, wobei Gelenkkopf und Gelenkaufnahme vorzugsweise die Drehführung zum Vorgeben der Relativdrehung bilden, insbesondere durch eine oder mehrere schraubenförmig verlaufende Führungsflächen (232) innenseitig in der Gelenkaufnahme (230A, 230B; 730A, 730B), welche zum Vorgeben der Relativdrehung mit einem oder mehreren Führungselementen am Gelenkkopf (220; 720) zusammenwirken.

10. Leitungsführungseinrichtung nach Anspruch 9, **dadurch gekennzeichnet,**
- **dass** der Gelenkkopf (220; 720) eine Grundform mit im wesentlichen dreieckigem Querschnitt aufweist, vorzugsweise mit bogenförmig gerundeten Seiten (221), deren drei Scheitel (222) als Führungselemente an entsprechenden schraubenförmig verlaufenden Führungsflächen (232) innenseitig in der Gelenkaufnahme (230A, 230B; 730A, 730B) geführt sind; oder
- **dass** der Gelenkkopf (120) eine Grundform mit im wesentlichen elliptischem Querschnitt aufweist, deren zwei Hauptscheitel als Führungselemente an entsprechenden schraubenförmig verlaufenden Führungsflächen innenseitig in der Gelenkaufnahme (130) geführt sind; **und/oder**
- **dass** Gelenkkopf und Gelenkaufnahme (220, 230; 720, 730) eine Gelenkverbindung bilden welche längsverstellbar, relativdrehbar und, für ein räumliches Auslenken der verbundenen Glieder zueinander, um mindestens zwei Achsen senkrecht zur Längsrichtung schwenkbar ist, wobei insbesondere die Seiten der Grundform des Gelenkkopfes im Längsschnitt konkav geformt sind, insbesondere entsprechend einem Krümmungsradius zur räumlichen Auslenkbarkeit.

11. Leitungsführungseinrichtung nach Anspruch 9 oder 10, **dadurch gekennzeichnet, dass**
- der zentrale Kern (710), zumindest die Gelenkaufnahme, durch zwei separate Bauteile (710A, 710B) die miteinander verbindbar sind gebildet wird; oder
- die Gelenkaufnahme (1230A, 1230B) durch mindestens zwei separate Einsatzteile (1250A, 1250B) gebildet wird, welche in einer Aufnahme am Kern befestigt sind, wobei jedes Einsatzteil vorzugsweise jeweils eine schraubenförmig verlaufende Innenfläche (232) aufweist.

12. Leitungsführungseinrichtung nach einem der vorstehenden Ansprüche 2 bis 11, **dadurch gekennzeichnet,**
- **dass** zumindest die Glieder (700A, 700B) des längenvariablen Abschnitts (11) oder alle Glieder jeweils einen zentralen Kern aufweisen mit mindestens zwei im Wesentlichen radialen Stegen (72) an welchen jeweils mindestens ein Mantelsegment gehalten ist, zur Begrenzung des Aufnahmeraums in Radialrichtung, wobei die Mantelsegmente (71) vorzugsweise aufschwenkbar angeordnet sind und oder biegsam ausgeführt sind und zwischen zwei Mantelsegmenten (71) eine Einführöffnung (71A, 71B) bilden,
- wobei vorzugsweise weiterhin vorgesehen ist, dass zumindest im längenvariablen Abschnitt (11) die Mantelsegmente (201; 1201) ein umfänglich und in Längsrichtung geschlossenes Rohr bilden, wobei die Verbindung jeweils aufeinanderfolgender Glieder eine Drehführung (1320, 1330) an den Mantelsegmenten umfasst.

13. Leitungsführungseinrichtung nach einem der vorstehenden Ansprüche 2 bis 12, **dadurch gekennzeichnet,**
- **dass** die in Längsrichtung längsverstellbare Verbindung jeweils mindestens zwei Längsanschläge umfasst, welche die das Längsverstellen zweier Glieder in beide Richtungen beschränkt, wobei die Längsanschläge (733) am Kern (710) und/oder an Mantelsegmenten gebildet sind, wobei vorzugsweise beide Längsanschläge durch eine Gelenkaufnahme (730A, 730B) am Kern (710) gebildet sind;
- wobei vorzugsweise weiterhin vorgesehen ist, dass das Längsspiel der längsverstellbaren Verbindung mindestens 20%, vorzugsweise mindestens 30%, und insbesondere bis zu 45% der Glieder-Teilung bzw. axialen Baulänge des Glieds (200A, 200B; 700A, 700B), insbesondere des zentralen Kerns beträgt.

14. Leitungsführungseinrichtung nach einem der vorstehenden Ansprüche, weiterhin umfassend mindestens eine in der Leitungsführungseinrichtung (10) geführte Leitung (60), **dadurch gekennzeichnet, dass** die mindestens eine Leitung im längenvariablen Abschnitt schraubenlinienförmig bzw. helixartig verlaufend angeordnet ist, insbesondere entsprechend einer ersten Schraubenwendel (S1; 61A) im ersten Teilabschnitt (11A) und einer mit entgegengesetztem Drehsinn verlaufenden zweiten Schraubenwendel (S2, 61B) im zweiten Teilabschnitt (11B).

15. Roboter (1), insbesondere Industrie-Gelenkarmroboter, **gekennzeichnet, durch** eine Leitungsführungseinrichtung (10) nach einem der vorstehenden Ansprüche 1 bis 14.

## Claims

1. A line guide apparatus (10) for guiding lines, such as cables, hoses or the like, between a first and a second connection point (2, 3) movable relative to the first, in particular on a robot (1) with multiple degrees of freedom, comprising:
a plurality of links, which form an accommodation space for lines, are arranged successively in a longitudinal direction (L) and are connected together in articulated manner by a respective articulated connection, wherein the articulated connection allows three-dimensional deflection of the connected links relative to one another; and
at least one elastic return element (300);
**characterized in that**
the line guide apparatus has a portion (11) of variable length, which comprises a number of links (200A, 200B; 700A, 700B) which are connected together so as to be relatively rotatable relative to one another about the longitudinal direction and
longitudinally adjustable relative to one another for elongation of the variable-length portion (11) in the longitudinal direction (L), and **in that** the return element (300) is elastically longitudinally expandable and arranged in such a way that it exerts a return force on the variable-length portion (11), which counteracts elongation of the variable-length portion.

2. The line guide apparatus according to Claim 1, **characterized in that** at least the number of links (200A, 200B; 700A, 700B) of the variable-length portion (11) are articulately connected and/or in particular are connected or couplable in such a way that longitudinal adjustment of two links (200A, 200B; 700A, 700B) relative to one another brings about relative rotation (R1, R2) thereof.

3. The line guide apparatus according to Claim 2, **characterized in that** the connection of in each case successive links (200A, 200B; 700A, 700B) of the variable-length portion (11) is configured such that longitudinal adjustment of two links relative to one another predetermines as a function of direction a relative rotation in the one or the opposing direction of rotation about the longitudinal direction (L);
wherein the connection in particular comprises a rotary guide, which, on elongating longitudinal adjustment of the two links (200A, 200B; 700A, 700B), brings about relative rotation thereof in a first direction of rotation (R1) and, on return longitudinal adjustment of the two links, brings about opposing relative rotation thereof.

4. The line guide apparatus according to Claim 2 or 3, in particular according to Claim 3, **characterized in that** the variable-length portion has a first sub-portion (11A), in which connected links (200A; 700A) in each case rotate in relative manner on elongation in a first direction of rotation (R1), and a second sub-portion (11B), in which connected links (200B; 700B) rotate in relative manner on elongation in a second direction of rotation (R2), which is the opposite direction to the first direction of rotation.

5. The line guide apparatus according to one of the preceding claims, **characterized in that**
- the at least one return element (300) is arranged to exert pretensioning in the longitudinal direction, which pretensioning contracts the variable-length portion; and/or
- the at least one elastic return element (300) is embodied as a rope or band, wherein the return element in particular comprises or is a rubber cable, preferably with rubber threads and/or rubber bands and a braided cover.

6. The line guide apparatus according to Claim 5, **characterized in that** an adjusting device (302; 927) for adjusting the pretensioning of the return element (300) is provided at at least one end region of the variable-length portion (11), in particular at an end link (200; 900) of the variable-length portion.

7. The line guide apparatus according to one of the preceding claims 2 to 6, in particular according to Claim 4, **characterized in that** a middle piece (250; 800) is provided between two sub-portions (11A, 11B) of the variable-length portion, wherein the middle piece (250; 800) has strain relief (840) for lines (60) to be guided and/or preferably has a greater structural length than the structural length or pitch of the number of links of the variable-length portion (11), and/or wherein the middle piece (250; 800) is connected in particular at each of its longitudinal ends in each case with one of the sub-portions (11A, 11B) rotatable in opposing directions, in particular via respectively opposing rotary guides (730A, 730B).

8. The line guide apparatus according to one of the preceding claims 2 to 7, in particular according to Claims 3 and 5, **characterized in that** at least the links (200A, 200B; 700A, 700B) of the variable-length portion (11) in each case have a central core (210; 710) with a central passage opening (225; 725) through which the elastic return element (300) is passed; and/or
**in that** the core (210; 710) has guide elements (220, 230; 720, 730) of the rotary guide; and/or the core (210; 710), on longitudinal adjustment of two links relative to one another, predetermines as a function of direction a relative rotation in the one or the opposing direction of rotation about the longitudinal direction.

9. The line guide apparatus according to one of the preceding claims 2 to 8, in particular according to Claim 8, **characterized in that** at least the links (200A, 200B; 700A, 700B) of the variable-length portion (11) in each case have a central core (210; 710), which forms a joint head (220; 720) and a joint receptacle (230A, 230B; 730A, 730B) opposite in the longitudinal direction, which latter is matchingly configured for articulated connection with the joint head of the next link, wherein joint head and joint receptacle preferably form the rotary guide for predetermining the relative rotation, in particular by one or more helically running guide faces (232) on the inside of the joint receptacle (230A, 230B; 730A, 730B), which interact to predetermine the relative rotation with one or more guide elements on the joint head (220; 720).

10. The line guide apparatus according to Claim 9, **characterized in that**
- the joint head (220; 720) has a basic shape with a substantially triangular cross-section, preferably with arcuately rounded sides (221), whose three vertices (222) are guided as guide elements against corresponding helically running guide faces (232) on the inside of the joint receptacle (230A, 230B; 730A, 730B); or
- the joint head (120) has a basic shape with a substantially elliptical cross-section, whose two major vertices are guided as guide elements against corresponding helically running guide faces on the inside of the joint receptacle (130); **and/or**
- joint head and joint receptacle (220, 230; 720, 730) form an articulated connection which is longitudinally adjustable, relatively rotatable and, for three-dimensional mutual deflection of the connected links, swivelable about at least two axes perpendicular to the longitudinal direction, wherein in particular the sides of the basic shape of the joint head are concavely shaped in the longitudinal section, in particular corresponding to a radius of curvature for three-dimensional deflectability.

11. The line guide apparatus according to Claim 9 or 10, **characterized in that**
- the central core (710), at least the joint receptacle, is formed by two separate components (710A, 710B) which are connectable to one another; or
- the joint receptacle (1230A, 1230B) is formed by at least two separate insert parts (1250A, 1250B), which are attached to the core in a receptacle, wherein each insert part preferably in each case has a helically running inner surface (232).

12. The line guide apparatus according to one of the preceding claims 2 to 11, **characterized in that** at least the links (700A, 700B) of the variable-length portion (11) or all links in each case have a central core with at least two substantially radial webs (72) by way of which in each case at least one shell segment is retained, to delimit the accommodation space in the radial direction, wherein the shell segments (71) are preferably arranged in upwardly pivotable manner and/or are of flexible construction and form an insertion opening (71A, 71B) between two shell segments (71); - wherein preferably further provided is that at least in the variable-length portion (11), the shell segments (201; 1201) form a circumferentially and longitudinally closed tube, wherein the connection of respectively successive links comprises a rotary guide (1320, 1330) at the shell segments.

13. The line guide apparatus according to one of the preceding claims 2 to 12, **characterized in that** the connection longitudinally adjustable in the longitudinal direction in each case comprises at least two longitudinal stops, which restrict the longitudinal adjustment of two links in both directions, wherein the longitudinal stops (733) are formed on the core (710) and/or on shell segments, wherein preferably both longitudinal stops are formed by a joint receptacle (730A, 730B) on the core (710); wherein preferably further provided is that the longitudinal play of the longitudinally adjustable connection amounts to at least 20%, preferably to at least 30% and in particular up to 45% of the link pitch or axial structural length of the link (200A, 200B; 700A, 700B), in particular of the central core.

14. The line guide apparatus according to one of the preceding claims, further comprising at least one line (60) guided in the line guide apparatus (10)), **characterized in that** the at least one line is arranged to run helicoidally or helically in the variable-length portion, in particular corresponding to a first helix coil (S1; 61A) in the first sub-portion (11A) and a second helix coil (S2; 61B) in the second sub-portion (11B) running with an opposing direction of rotation.

15. A robot (1), in particular an industrial articulated-arm robot, **characterized by** a line guide apparatus (10) according to one of preceding claims 1 to 14.

## Revendications

1. Dispositif de guidage de ligne (10) pour guider des conduites, telles que des câbles, des tuyaux ou similaires, entre un premier point de raccordement (2) et un deuxième point de raccordement (3) mobile par rapport à celui-ci, en particulier sur un robot (1) à plusieurs degrés de liberté, le dispositif comprenant:
une pluralité de maillons qui forment un espace de logement pour des câbles, sont disposés les uns à la suite des autres dans une direction longitudinale (L) et
sont reliés entre eux de manière articulée par une liaison articulée respective, la liaison articulée permettant une déviation spatiale des maillons reliés les uns par rapport aux autres; et
au moins un élément de rappel élastique (300);
**caractérisé en ce que**
le dispositif de guidage de ligne présente une partie à longueur variable (11) qui comprend un certain nombre de maillons (200A, 200B; 700A, 700B) qui sont reliés entre eux de manière à pouvoir tourner les uns par rapport aux autres autour de la direction longitudinale et à pouvoir être déplacés longitudinalement les uns par rapport aux autres dans la direction longitudinale (L) afin de prolonger la partie à longueur variable (11),
et **en ce que** l'élément de rappel (300) est élastiquement extensible dans le sens longitudinal et est agencé de manière à exercer une force de rappel sur la partie à longueur variable (11) qui s'oppose à un allongement de la partie de longueur variable (11).

2. Dispositif de guidage de ligne selon la revendication 1, **caractérisé en ce qu'**au moins le nombre de maillons (200A, 200B; 700A, 700B) de la partie à longueur variable (11) sont reliés de manière articulée et/ou, en particulier, sont reliés ou peuvent être couplés de telle sorte qu'un déplacement longitudinal de deux maillons (200A, 200B; 700A, 700B) l'un par rapport à l'autre provoque leur rotation relative (R1, R2).

3. Dispositif de guidage de ligne selon la revendication 2, **caractérisé en ce que** la liaison entre les maillons successifs (200A, 200B; 700A, 700B) de la partie à longueur variable (11) est conçue de telle sorte qu'un réglage longitudinal de deux maillons l'un par rapport à l'autre impose, en fonction de la direction, un mouvement relatif dans le sens de rotation ou dans le sens de rotation opposé autour de la direction longitudinale (L); la liaison comprenant en particulier un guidage rotatif qui, lors d'un déplacement longitudinal en allongement des deux maillons (200A, 200B; 700A, 700B), provoque leur rotation relative dans un premier sens de rotation (R1) et, lors d'un déplacement longitudinal en raccourcissement des deux maillons, provoque leur rotation relative opposée.

4. Dispositif de guidage de ligne selon la revendication 2 ou 3, en particulier selon la revendication 3, **caractérisé en ce que** la partie à longueur variable comprend une première partie (11A) dans laquelle des maillons reliés (200A; 700A) tournent relativement les uns par rapport aux autres lors de l'allongement dans un premier sens de rotation (R1), et une deuxième partie (11B) dans laquelle des maillons reliés (200B; 700B) tournent relativement les uns par rapport aux autres lors de l'allongement dans un deuxième sens de rotation (R2) opposé au premier sens de rotation.

5. Dispositif de guidage de ligne selon l'une des revendications précédentes, **caractérisé en ce que**
- ledit au moins un élément de rappel (300) est agencé pour exercer une précontrainte dans le sens longitudinal qui contracte la partie à longueur variable; et/ou
- **en ce que** ledit au moins un élément de rappel élastique (300) est réalisé sous forme de câble ou de bande, l'élément de rappel comprenant notamment un câble en caoutchouc, de préférence avec des fils en caoutchouc et/ou des bandes en caoutchouc ainsi qu'une tressage.

6. Dispositif de guidage de ligne selon la revendication 5, **caractérisé en ce qu'**un dispositif de réglage (302; 927) est prévu sur au moins une zone d'extrémité de la partie à longueur variable (11), en particulier sur un maillon d'extrémité (200; 900) de la partie à longueur variable, pour régler la précontrainte de l'élément de rappel (300).

7. Dispositif de guidage de ligne selon l'une des revendications 2 à 6 précédentes, en particulier selon la revendication 4, **caractérisé en ce qu'**entre deux sections partielles (11A, 11B) de la partie à longueur variable une section centrale (250; 800) est prévue, la section centrale (250; 800) comportant un dispositif de décharge de traction (840) pour des conduites (60) à acheminer et/ou présentant de préférence une longueur de construction supérieure à la longueur de construction ou partage du nombre de maillons de la partie à longueur variable (11) et/ou la section centrale (250; 800) étant reliée en particulier à chacune de ses extrémités longitudinales à l'une des sections partielles (11A, 11B) tournant en sens inverse l'une par rapport à l'autre, en particulier par l'intermédiaire de guides rotatifs (730A, 730B) tournant en sens inverse.

8. Dispositif de guidage de ligne selon l'une des revendications 2 à 7 précédentes, en particulier selon les revendications 3 et 5, **caractérisé en ce qu'**au moins les maillons (200A, 200B; 700A, 700B) de la partie à longueur variable (11) comportent chacun un noyau central (210; 710) avec une ouverture centrale de passage (225; 725) à travers laquelle passe l'élément de rappel élastique (300); et/ou **en ce que** le noyau (210; 710) comporte des éléments de guidage (220, 230; 720, 730) du guide rotatif; et/ou le noyau (210; 710), lors du réglage longitudinal de deux maillons l'un par rapport à l'autre, défini une rotation relative dans un sens ou dans le sens opposé autour de la direction longitudinale.

9. Dispositif de guidage de ligne selon l'une des revendications 2 à 8 précédentes, en particulier selon la revendication 8, **caractérisé en ce qu'**au moins les maillons (200A, 200B; 700A, 700B) de la partie à longueur variable (11) comportent chacun un noyau central (210; 710) qui forme une tête d'articulation (220; 720) et un logement d'articulation (230A, 230B; 730A, 730B) opposé dans le sens longitudinal, qui est conçu de manière correspondante pour la liaison articulée avec la tête d'articulation du maillon suivant, la tête d'articulation et le logement d'articulation formant de préférence le guide rotatif pour prédéterminer la rotation relative, en particulier par une ou plusieurs surfaces de guidage hélicoïdales (232) à l'intérieur du logement d'articulation (230A, 230B; 730A, 730B), qui coopèrent avec un ou plusieurs éléments de guidage sur la tête d'articulation (220; 720) pour prédéterminer la rotation relative.

10. Dispositif de guidage de conduite selon la revendication 9, **caractérisé en ce que**
- la tête d'articulation (220; 720) présente une forme de base avec une section transversale essentiellement triangulaire, de préférence avec des côtés arrondis en forme d'arc (211) dont les trois sommets (222) sont guidés en tant qu'éléments de guidage sur des surfaces de guidage correspondantes (232) s'étendant en hélice à l'intérieur du logement d'articulation (230A, 230B; 730A, 730B); ou en que
- la tête d'articulation (120) présente une forme de base avec une section transversale essentiellement elliptique, dont les deux sommets principaux sont guidés en tant qu'éléments de guidage sur des surfaces de guidage correspondantes s'étendant en hélice à l'intérieur du logement d'articulation (130); et/ou **en ce que**
- la tête d'articulation et le logement d'articulation (220, 230; 720, 730) forment une liaison articulée qui est réglable en longueur et est rotatif relativement et, pour permettre une déviation spatiale des maillons reliés les uns par rapport aux autres, peut pivoter autour d'au moins deux axes perpendiculaires à la direction longitudinale, les côtés de la forme de base de la tête d'articulation étant notamment de forme concave en coupe longitudinale, notamment selon un rayon de courbure permettant la déviation spatiale.

11. Dispositif de guidage de ligne selon la revendication 9 ou 10, **caractérisé en ce que**
- le noyau central (710), au moins le logement d'articulation, est formé par deux composants séparés (710A, 710B) qui peuvent être reliés entre eux; ou
- le logement d'articulation (1230A, 1230B) est formé par au moins deux pièces d'insertion séparées (1250A, 1250B) qui sont fixées dans un logement sur le noyau, chaque pièce d'insertion présentant de préférence une surface intérieure hélicoïdale (232).

12. Dispositif de guidage de ligne selon l'une des revendications 2 à 11 précédentes, **caractérisé en ce que**
- au moins les maillons (700A, 700B) de la partie à longueur variable (11) ou tous les maillons présentent chacun un noyau central avec au moins deux nervures (72) essentiellement radiales, auxquelles est maintenu au moins un segment d'enveloppe, pour délimiter l'espace de logement dans la direction radiale, les segments d'enveloppe (71) étant de préférence disposés de manière pivotante pour s'ouvrir et/ou réalisés de manière flexible et formant une ouverture d'introduction (71A, 71B) entre deux segments d'enveloppe (71),
- de préférence, il est en outre prévu que, au moins dans la partie à longueur variable (11), les segments d'enveloppe (201; 1201) forment un tube fermé sur le pourtour et dans le sens longitudinal, la liaison entre des maillons successifs comprenant un guide rotatif (1320, 1330) sur les segments d'enveloppe.

13. Dispositif de guidage de ligne selon l'une des revendications 2 à 12 précédentes, **caractérisé en ce que**
- la liaison réglable longitudinalement comprend au moins deux butées longitudinales qui limitent le réglage longitudinal de deux éléments dans les deux directions, les butées longitudinales (733) étant formées sur le noyau (710) et/ou sur des segments d'enveloppe, les deux butées longitudinales étant de préférence formées par un logement d'articulation (730A, 730B) sur le noyau (710);
- dans lequel il est en outre prévu de préférence que le jeu longitudinal de la liaison réglable longitudinalement soit d'au moins 20 %, de préférence d'au moins 30 % et en particulier jusqu'à 45 % de la partage des maillons ou de la longueur axiale de l'élément (200A, 200B; 700A, 700B), en particulier du noyau central.

14. Dispositif de guidage de ligne selon l'une des revendications précédentes, comprenant en outre au moins une ligne (60) guidé dans le dispositif de guidage de ligne (10), **caractérisé en ce que** ladite au moins une ligne est disposée en hélice dans la partie à longueur variable, en particulier selon une première hélice (S1; 61A) dans la première partie (11A) et une deuxième hélice (S2, 61B) de sens inverse dans la deuxième partie (11B).

15. Robot (1), en particulier robot industriel à bras articulé, **caractérisé par** un dispositif de guidage de ligne (10) selon l'une des revendications 1 à 14 précédentes.
